(19) Europäisches Patentamt
European Patent Office
Office européen des brevets

(11) **EP 4 703 779 A1**

(12) **EUROPEAN PATENT APPLICATION**
published in accordance with Art. 153(4) EPC

(43) Date of publication:
**04.03.2026 Bulletin 2026/10**

(21) Application number: **24797032.0**

(22) Date of filing: **24.04.2024**

(51) International Patent Classification (IPC):
**G02B 6/255** (2006.01)   **G01M 11/00** (2006.01)
**G02B 6/02** (2006.01)

(52) Cooperative Patent Classification (CPC):
**G01M 11/00; G02B 6/02; G02B 6/255**

(86) International application number:
**PCT/JP2024/015964**

(87) International publication number:
**WO 2024/225286 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.04.2023 JP 2023072782**

(71) Applicant: **Fujikura Ltd.
Tokyo 135-8512 (JP)**

(72) Inventors:
• **ODA, Takuya
Sakura-shi, Chiba 285-8550 (JP)**
• **SASAKI, Yusuke
Sakura-shi, Chiba 285-8550 (JP)**

(74) Representative: **Plasseraud IP
104 Rue de Richelieu
CS92104
75080 Paris Cedex 02 (FR)**

(54) **TEST METHOD AND TEST SYSTEM**

(57)    Provided is a fusion splicing method making it easier to acknowledge that a fiber connection body with a low coupling efficiency of the cores is achieved, if this happens. A fusion splicing method (S1) includes a post-fusion-splicing measurement step (S16) of identifying a position of a marker of one multi-core fiber (OF1) of two multi-core fibers (OF1, OF2) based on a direction in which a predetermined first shape appears in a graph indicating a direction dependency of a transmitted light intensity of the one multi-core fiber (OF1) and identifying a position of a marker of the other multi-core fiber (OF2) based on a direction in which a predetermined second shape appears in a graph indicating a direction dependency of a transmitted light intensity of the other multi-core fiber (OF2), the two multi-core fibers (OF1, OF2) being fusion-spliced to each other via their respective end surfaces.

FIG. 1

# Description

**Technical Field**

The present invention relates to a test method and a test system each of which tests a fusion-spliced state of two optical fibers.

**Background Art**

An example of the method for connecting the optical fibers can be fusion-splicing. In the fusion-splicing, generally, end surfaces of two optical fibers are caused to abut on each other, and the end surfaces having been abut are then heated and melted. Thereafter, the end surfaces of the two optical fibers are allowed to naturally cool so as to be solidified. The fusion-splicing of the two optical fibers is realized as such. For example, Patent Literature 1 discloses a fusion splicing device and a fusion splicing method for optical fibers.

**Citation List**

Patent Literatures

Patent Literature 1 : International Publication No. WO 2019/163150

**Summary of Invention**

Technical Problem

In recent years, there has been a widely used optical fiber which has a cross section having an anisotropic refractive index distribution. Examples of such an optical fiber include: a multi-core fiber including a plurality of cores; and a polarization-maintaining and absorption-reducing (PANDA) fiber having a polarization maintaining function. In order to fusion-splice such optical fibers, it is necessary to carry out rotational alignment before carrying out fusion-splicing. In the rotational alignment of two multi-core fibers each having a marker for identifying a core number, it is required that core positions of the two multi-core fibers be caused to match and that a positional relation between the markers satisfy a predetermined condition. In the rotational alignment of two PANDA fibers each having a stress applying part for realizing a polarization maintaining function, it is required that core positions of the two PANDA fibers be caused to match and that a positional relation between the stress applying parts satisfy a predetermined condition.

An aspect of the present invention was made in light of the above-described problems, and has an object to provide a test method or a test system each of which is capable of testing, after fusion-splicing, whether or not the fusion-splicing has been carried out appropriately.

Solution to Problem

A test method in accordance with an aspect of the present invention includes: a post-fusion-splicing measurement step of identifying a position of a marker of one multi-core fiber of two multi-core fibers on a basis of a direction in which a predetermined first shape appears in a graph indicative of a direction dependency of a transmitted light intensity of the one multi-core fiber and identifying a position of a marker of the other multi-core fiber of the two multi-core fibers on a basis of a direction in which a predetermined second shape appears in a graph indicative of a direction dependency of a transmitted light intensity of the other multi-core fiber, each of the two multi-core fibers including a cladding and the marker formed inside the cladding, and the two multi-core fibers being fusion-spliced to each other via respective end surfaces of the two multi-core fibers.

A test system in accordance with an aspect of the present invention includes: a single light source or a plurality of light sources; a single light detector or a plurality of light detectors; and a single control section or a plurality of control sections, the single control section or at least one of the plurality of control sections carrying out a post-fusion-splicing measurement step by using the single light source or at least one of the plurality of light sources and the single light detector or at least one of the plurality of light detectors, the post-fusion-splicing measurement step identifying a position of a marker of one multi-core fiber of two multi-core fibers on a basis of a direction in which a predetermined first shape appears in a graph indicative of a direction dependency of a transmitted light intensity of the one multi-core fiber and identifying a position of a marker of the other multi-core fiber of the two multi-core fibers on a basis of a direction in which a predetermined second shape appears in a graph indicative of a direction dependency of a transmitted light intensity of the other multi-core fiber, each of the two multi-core fibers including a cladding and the marker formed inside the cladding, and the two multi-core fibers being fusion-spliced to each other via respective end surfaces of the two multi-core fibers.

Advantageous Effects of Invention

In accordance with an aspect of the present invention, it is possible to test, after fusion-splicing, whether or not the fusion-splicing has been carried out appropriately.

**Brief Description of Drawings**

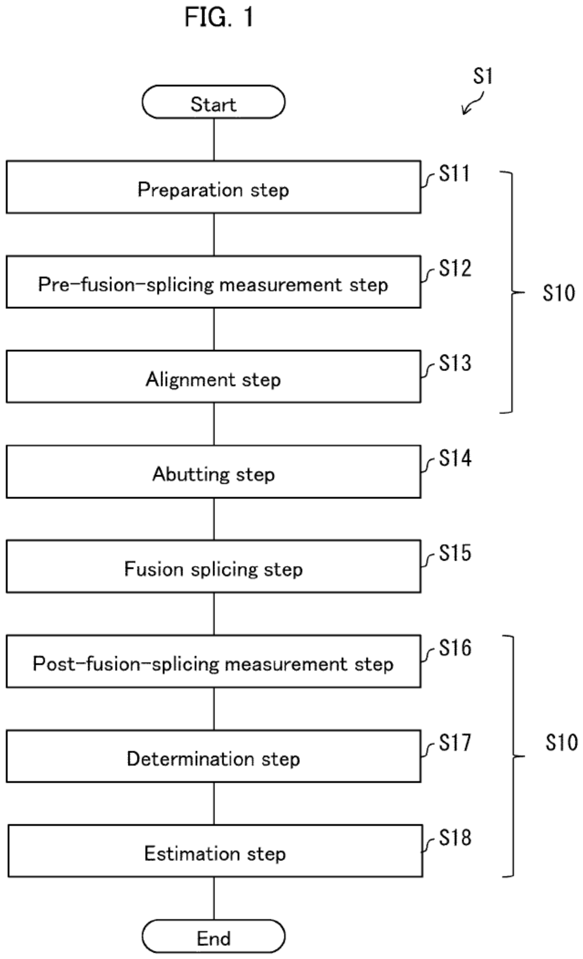

Fig. 1 is a flowchart illustrating a flow of a fusion splicing method in accordance with an embodiment of the present invention.

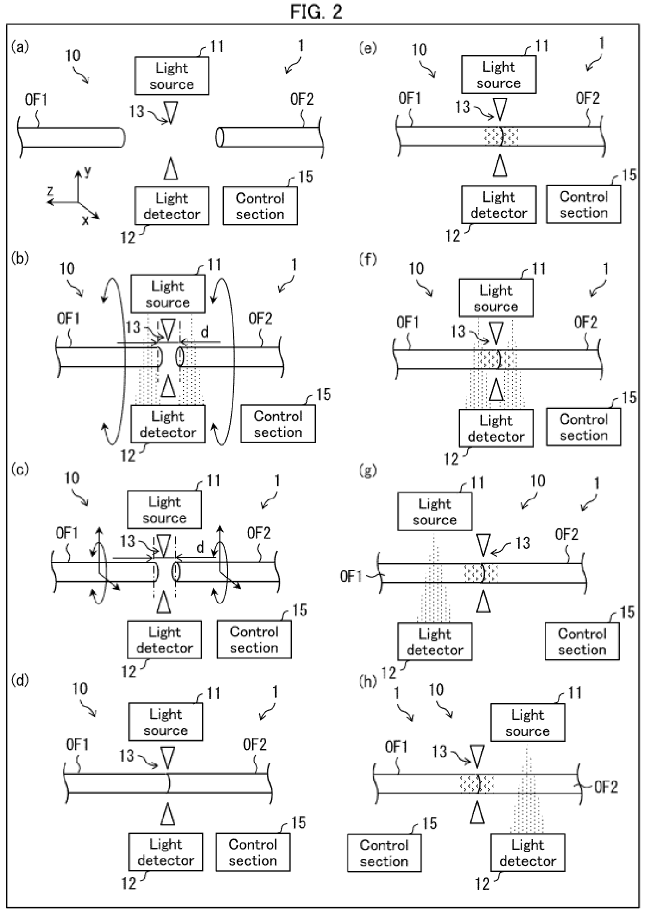

Fig. 2 is a block diagram illustrating a configuration of a fusion splicing device for realizing the fusion splicing method shown in Fig. 1.

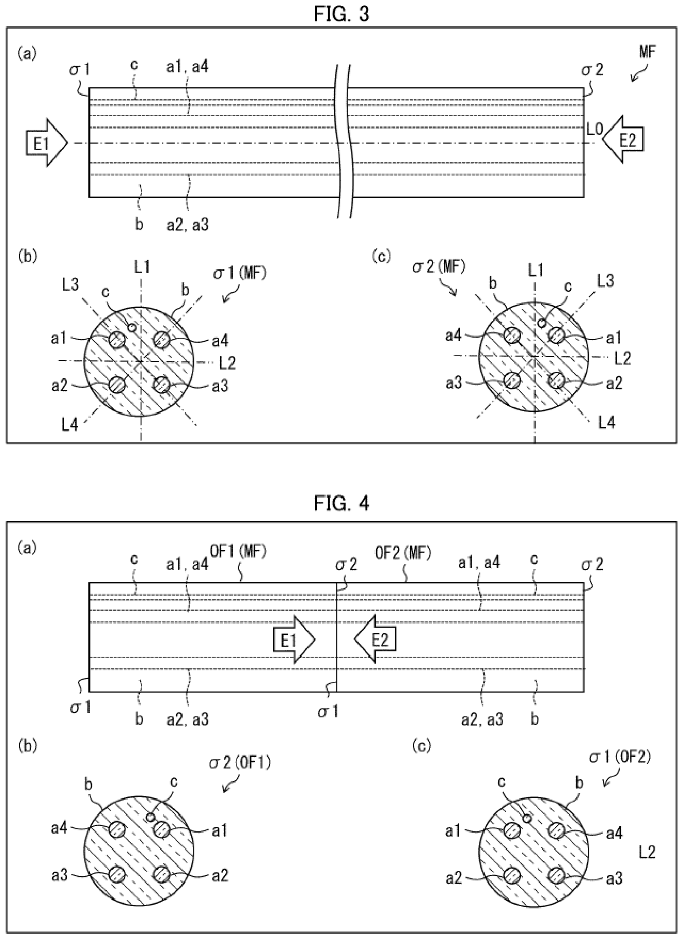

Fig. 3 is a view illustrating a multi-core fiber, which is one example of an optical fiber to which the fusion splicing method shown in Fig. 1 is applied. (a) is a side view of the multi-core fiber, (b) is a front view of one end surface of the multi-core fiber viewed in a direction of a sight line E1, and (c) is a front view of the other end surface of the multi-core fiber viewed in a direction of a sight line E2.

Fig. 4 is a view illustrating a connected part of two optical fibers connected via general connection. (a) is a side view of the two optical fibers, (b) is a front view of one end surface of the two optical fibers viewed in a direction of a sight line E2, and (c) is a front view of the other end surface of the two optical fibers viewed in a direction of a sight line E1.

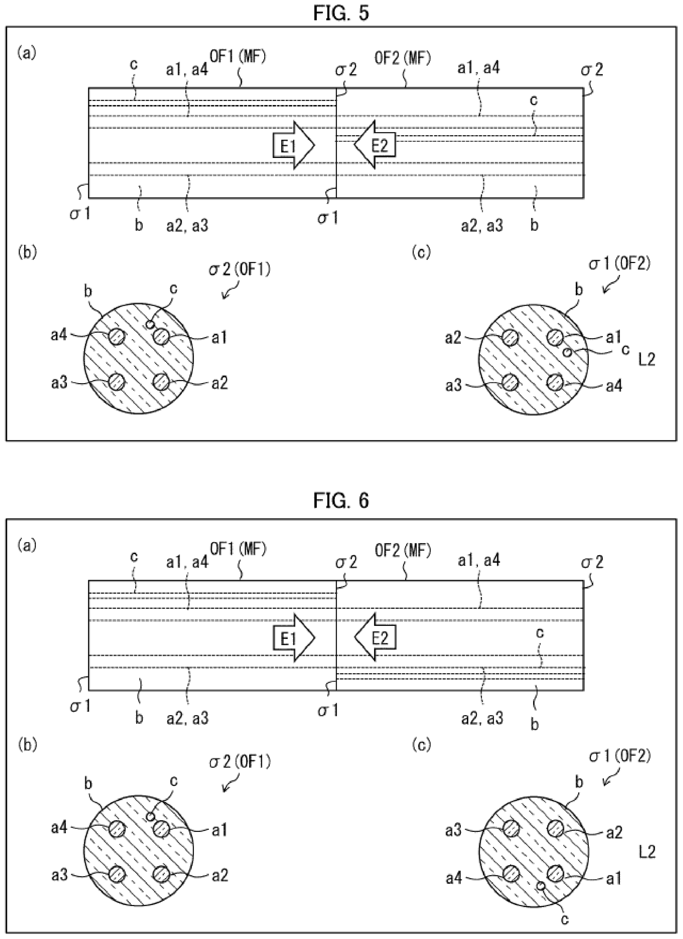

Fig. 5 is a view illustrating a fusion-spliced part of two optical fibers connected via non-general connection. (a) is a side view of the two optical fibers, (b) is a front view of one end surface of the two optical fibers viewed in a direction of a sight line E2, and (c) is a front view of the other end surface of the two optical fibers viewed in a direction of a sight line E1.

Fig. 6 is a view illustrating a fusion-spliced part of two optical fibers connected via non-general connection. (a) is a side view of the two optical fibers, (b) is a front view of one end surface of the two optical fibers viewed in a direction of a sight line E2, and (c) is a front view of the other end surface of the two optical fibers viewed in a direction of a sight line E1.

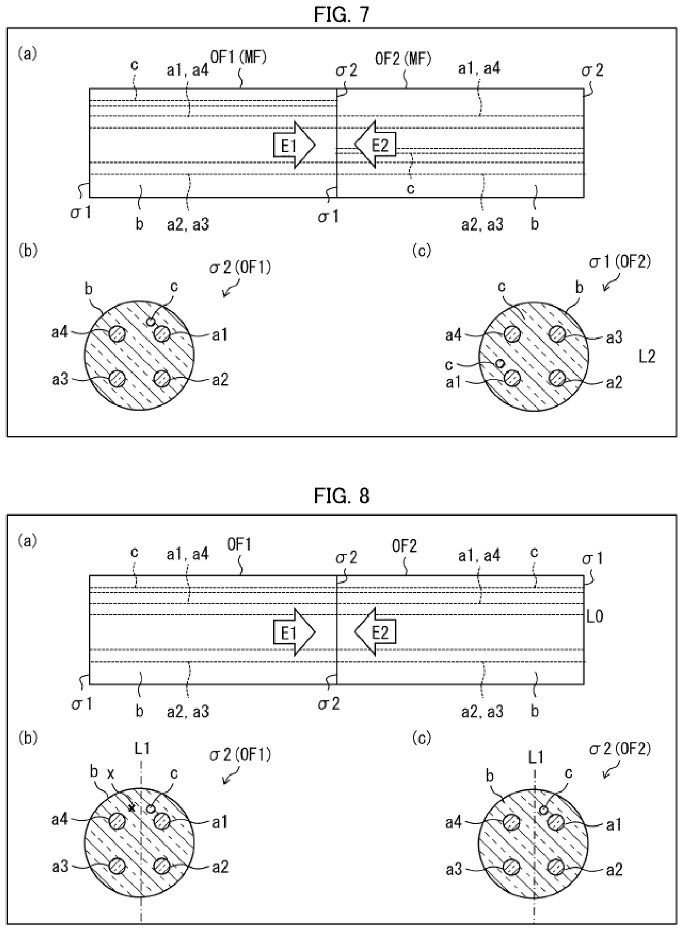

Fig. 7 is a view illustrating a fusion-spliced part of two optical fibers connected via non-general connection. (a) is a side view of the two optical fibers, (b) is a front view of one end surface of the two optical fibers viewed in a direction of a sight line E2, and (c) is a front view of the other end surface of the two optical fibers viewed in a direction of a sight line E1.

Fig. 8 is a view illustrating a fusion-spliced part of two optical fibers connected via inverted connection (inverted connection with respect to an axis L1). (a) is a side view of the two optical fibers, (b) is a front view of one end surface of the two optical fibers viewed in a direction of a sight line E2, and (c) is a front view of the other end surface of the two optical fibers viewed in a direction of a sight line E1.

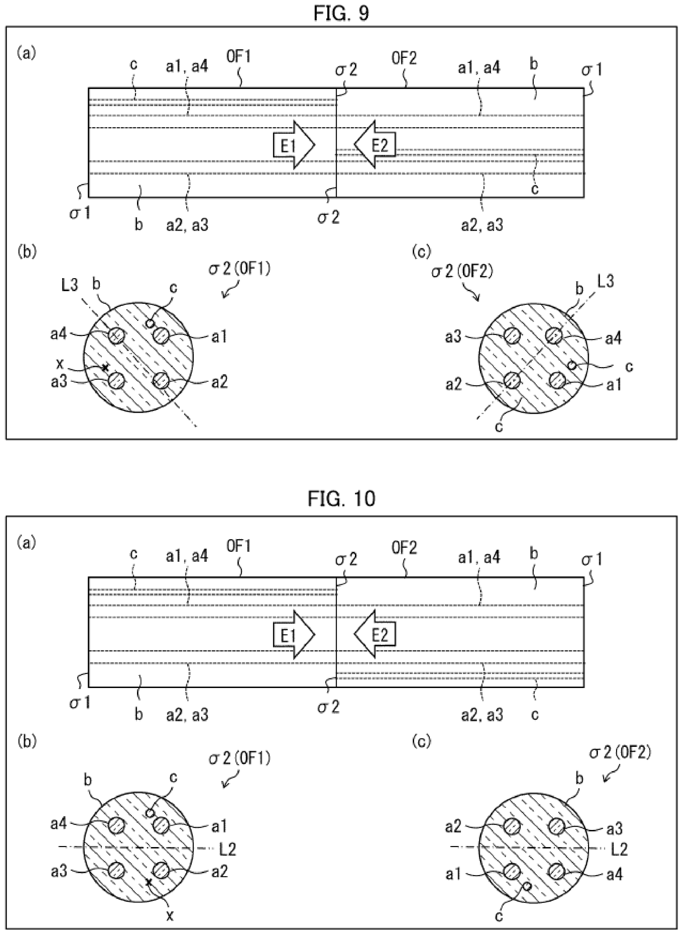

Fig. 9 is a view illustrating a fusion-spliced part of two optical fibers connected via inverted connection (inverted connection with respect to an axis L2). (a) is a side view of the two optical fibers, (b) is a front view of one end surface of the two optical fibers viewed in a direction of a sight line E2, and (c) is a front view of the other end surface of the two optical fibers viewed in a direction of a sight line E1.

Fig. 10 is a view illustrating a fusion-spliced part of two optical fibers connected via inverted connection (inverted connection with respect to an axis L3). (a) is a side view of the two optical fibers, (b) is a front view of one end surface of the two optical fibers viewed in a direction of a sight line E2, and (c) is a front view of the other end surface of the two optical fibers viewed in a direction of a sight line E1.

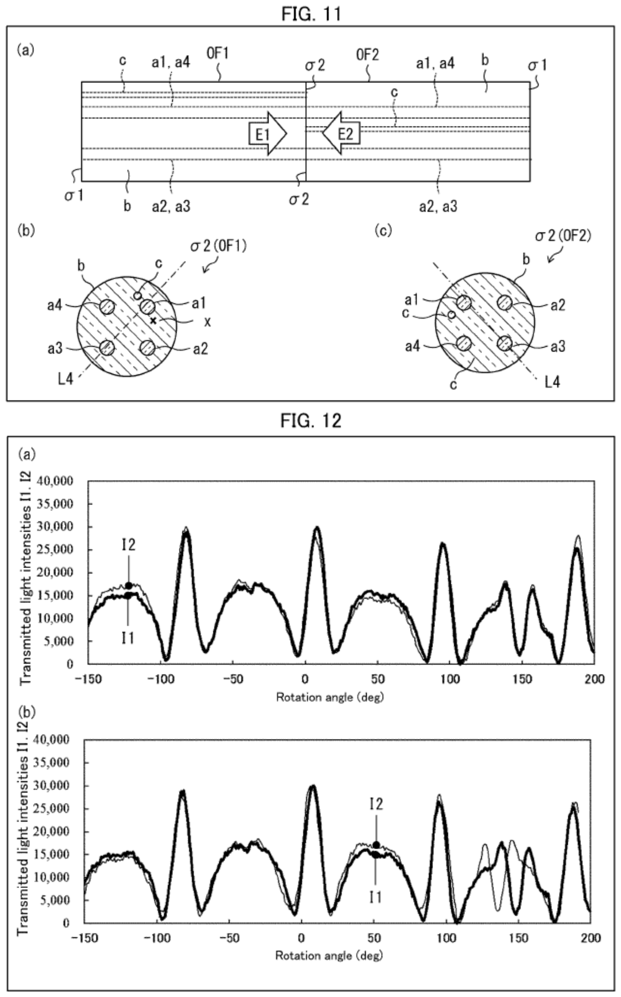

Fig. 11 is a view illustrating a fusion-spliced part of two optical fibers connected via inverted connection (inverted connection with respect to an axis L4). (a) is a side view of the two optical fibers, (b) is a front view of one end surface of the two optical fibers viewed in a direction of a sight line E2, and (c) is a front view of the other end surface of the two optical fibers viewed in a direction of a sight line E1.

In Fig. 12, (a) is a graph illustrating direction dependencies of transmitted light intensities of two optical fibers (multi-core fibers each including a low refractive index marker) connected via general connection as shown in Fig. 4. (b) is a graph illustrating direction dependencies of transmitted light intensities of two optical fibers connected via inverted connection as shown in Fig. 8.

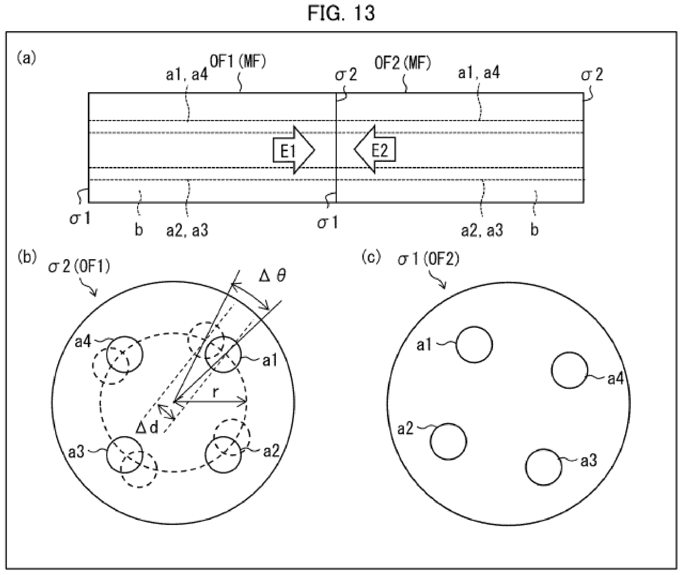

Fig. 13 is a view illustrating a method for estimating a coupling efficiency or a connection loss of two optical fibers. (a) is a side view of the two optical fibers, (b) is a front view of one end surface of the two optical fibers viewed in a direction of a sight line E2, and (c) is a front view of the other end surface of the two optical fibers viewed in a direction of a sight line E1.

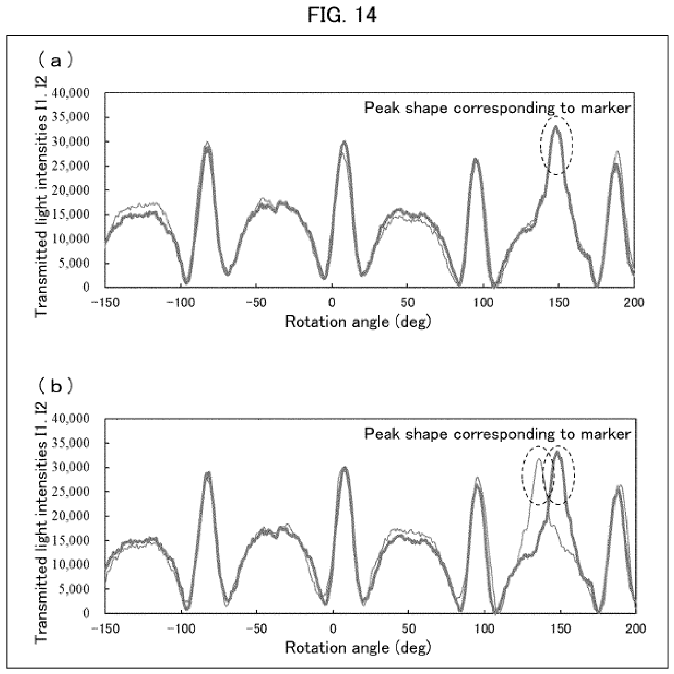

In Fig. 14, (a) is a graph illustrating direction dependencies of transmitted light intensities of two optical fibers (multi-core fibers each including a high refractive index marker) connected via general connection as shown in Fig. 4. (b) is a graph illustrating direction dependencies of transmitted light intensities of two optical fibers connected via inverted connection as shown in Fig. 8.

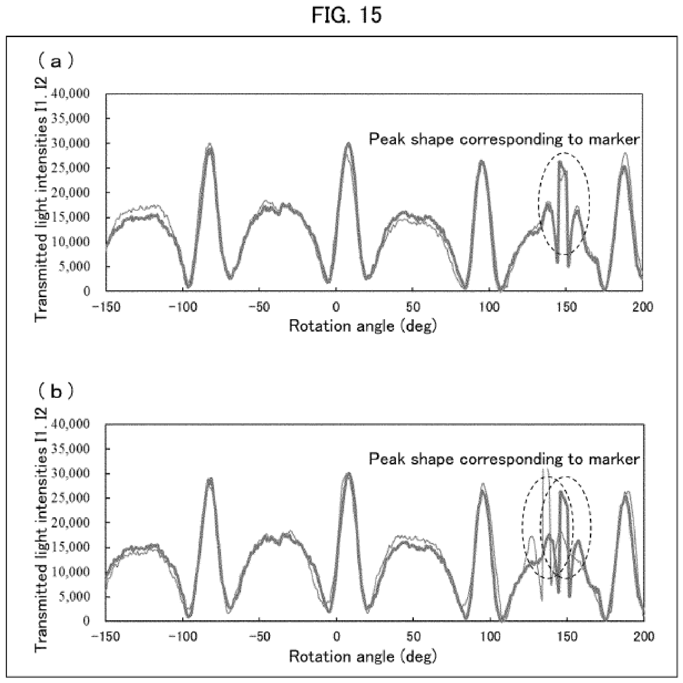

In Fig. 15, (a) is a graph illustrating direction dependencies of transmitted light intensities of two optical fibers (multi-core fibers each including a low refractive index marker surrounded by a high refractive index area) connected via general connection as shown in Fig. 4. (b) is a graph illustrating direction dependencies of transmitted light intensities of two optical fibers connected via inverted connection as shown in Fig. 8.

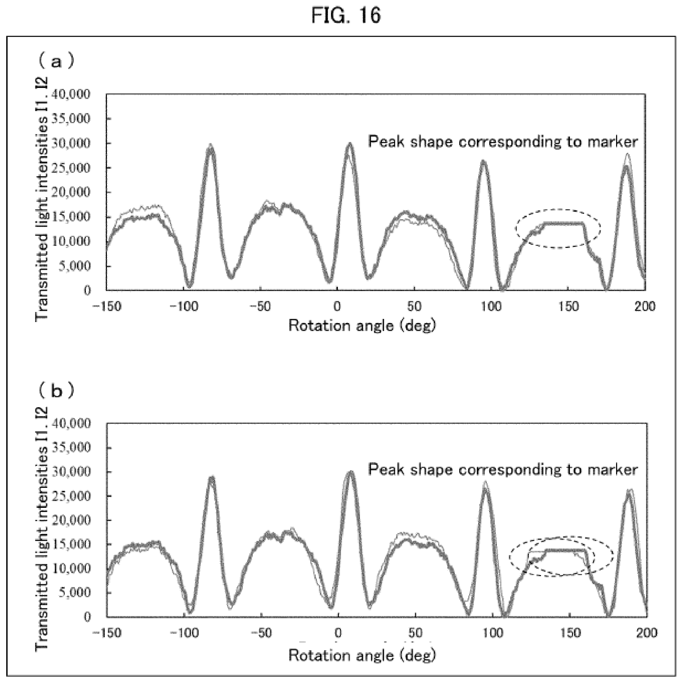

In Fig. 16, (a) is a graph illustrating direction dependencies of transmitted light intensities of two optical fibers connected via general connection as shown in Fig. 4. (b) is a graph illustrating direction dependencies of transmitted light intensities of two optical fibers connected via inverted connection as shown in Fig. 8.

### Description of Embodiments

Flow of Fusion Splicing Method

The following will describe, with reference to Figs. 1 and 2, a flow of a fusion splicing method S1 including a test method S10 in accordance with an embodiment of the present invention. The fusion splicing method S1 is a method for fusion-splicing, by using a fusion splicing device 1, two optical fibers OF1 and OF2 each of which has a cross section having an anisotropic refractive index distribution. The test method S10 is a method for testing whether or not rotational alignment has been carried out appropriately. Fig. 1 is a flowchart illustrating a flow of the fusion splicing method S1. Fig. 2 is a perspective view illustrating states of the optical fibers OF1 and OF2 in steps included in the fusion splicing method S1. The present embodiment assumes, as each of the optical fibers OF1 and OF2, a multi-core fiber including a cladding, a plurality of cores formed inside the cladding, and a single marker formed inside the cladding. Specific examples of the optical fibers OF1 and OF2 will be described later with reference to different drawings. The fusion splicing method S1 can be regarded as a method for manufacturing a fiber connection body obtained by fusion-splicing the optical fibers OF1 and OF2 to each other.

As shown in Fig. 1, the fusion splicing method S1 includes a preparation step S11, a pre-fusion-splicing measurement step S12, an alignment step S13, an abutting step S14, a fusion splicing step S15, a post-fusion-splicing measurement step S16, a determination step S17, and an estimation step S18. The test method S10 includes, of these steps, the steps other than the abutting step S14 and the fusion splicing step S15. Note that, in the fusion splicing method S1 and the test method S10, the preparation step S11, the pre-fusion-splicing measurement step S12, and the alignment step S13 are not essential, and can be omitted.

The fusion splicing method S1 including the test method S10 in accordance with the present embodiment is executed by using the fusion splicing device 1 including the test system 10 in accordance with the present embodiment, for example. As shown in Fig. 2, the fusion splicing device 1 includes a light source 11, a light detector 12, a heating section 13, an alignment mechanism (not illustrated), and a control section 15. The test system 10 is constituted by, of these elements, the elements other than the heating section 13. In an example shown in Fig. 2, only one set of the light source 11 and the light detector 12 is indicated. Alternatively, however, the fusion splicing device 1 may include two or more sets of the light source 11 and the light detector 12. In the following description, an axial direction of the optical fibers OF1 and OF2 will be referred to as a "z-axis direction", and two directions orthogonal to the z-axis direction will be referred to as an "x-axis direction" and a "y-axis direction". The x-axis direction and the y-axis direction are directions which are orthogonal to each other.

The light source 11 is a feature for emitting light to the optical fibers OF1 and OF2. In the present embodiment, an LED is used as the light source 11. Instead of the LED, an LD may be used as the light source 11. The light detector 12 is a feature for detecting light having transmitted through the optical fibers OF1 and OF2. In the present embodiment, a photodiode or a photoconductor is used as the light detector 12. Instead of the photodiode or the photoconductor, a camera may be used as the light detector 12. The light detector 12 is disposed on an optical path of light having been emitted from the light source 11 and having transmitted through the optical fibers OF1 and OF2. In the example shown in Fig. 2, the light source 11 and the light detector 12 are arranged so as to face each other via the optical fibers OF1 and OF2. However, this is not limitative. For example, in a case where an optical element, such as a mirror, which bends the optical path is disposed between the light source 11 and the optical fibers OF1 and OF2 and/or between the light detector 12 and the optical fibers OF1 and OF2, the light source 11 and the light detector 12 can be arranged so as not to face each other. The heating section 13 is a feature for heating end surfaces of the optical fibers OF1 and OF2 that are to be fusion-spliced to each other. In the present embodiment, an electrode pair constituted by two electrodes is used as the heating section 13. Instead of the electrode pair, an electrode group constituted by three or more electrodes or a laser device such as a $CO_2$ laser may be used as the heating section 13. The alignment mechanism is a feature for holding the optical fibers OF1 and OF2 and translating and rotating the optical fibers OF1 and OF2 independently. The alignment mechanism used in the present embodiment is an alignment mechanism including a holding member, a translating mechanism, and a rotating mechanism. The holding member is attachable to or detachable from the alignment mechanism. Therefore, the holding member may be regarded as one constituent element of the fusion splicing device 1, the test system 10, a fusion splicing system (described later), or a detection system (described later), each of which is independent from the alignment mechanism. The holding member is a member for holding the optical fibers OF1 and OF2, and has a function for chucking or fixing end portions of the optical fibers OF1 and OF2. In the present embodiment, the holding member can be constituted by, for example, (a) a plate-like member having a V-groove in which the optical fibers OF1 and OF2 are to be housed and (b) a pressing member which presses the optical fibers OF1 and OF2 housed in the V-groove so as to fix the optical fibers OF1 and OF2 housed in the V-groove to the plate-like member. The translating mechanism is a mechanism for causing the optical fibers OF1 and OF2 which are held by the holding member and whose fixed state by the pressing member is cancelled to independently move in the x-axis direction, y-axis direction, and z-axis direction. The rotating mechanism is a mechanism for causing the optical fibers OF1 and OF2 which are held by the holding member and whose fixed state by the pressing member is cancelled to independently rotate about the z-axis. Upon completion of the alignment by the translating mechanism and the rotating mechanism, the fixed state by the pressing member is brought into an effective state. Consequently, the optical fibers OF1 and OF2 are fixed to the holding member. Note that the holding member is a feature which is needed in transferring the optical fibers OF1 and OF2 having been aligned to another device with the aligned state being kept. The holding member can be omitted. In addition to or in place of the holding member, it is possible to use another holding member which is configured to be used with the fixed state being effective during an alignment operation and which is configured to be used with the fixed state being cancelled after an alignment operation. In this case, the above-described translating mechanism causes parallel translation of the optical fibers OF1 and OF2 and the another holding member in the z-axis direction, y-axis direction, and z-axis direction. Further, the above-described rotating mechanism causes the optical fibers OF1 and OF2 and the another holding member to rotate about the z-axis. The control section 15 is a feature for controlling the light source 11, the light detector 12, the heating section 13, and the alignment mechanism so as to execute the steps included in the fusion splicing method S1. In the present embodiment, a microcontroller is used as the control section 15. In place of the microcontroller, an integrated circuit such as an Integrated Circuit (IC), a Large-scale Integrated Circuit (LSI), or an Application Specific Integrated Circuit (ASIC) or a Numerical Control (NC) device may be used as the control section 15. The NC device may be the one using a machine learning device.

Note that the above-described light source 11 may be provided as a single light source or a plurality of light sources, the above-described light detector 12 may be provided as a single light detector or a plurality of light detectors, the above-described heating section 13 may be provided as a single heating section or a plurality of heating sections, the above-described alignment mechanism may be provided as a single alignment mechanism or a plurality of alignment mechanisms, and the above-described control section 15 may be provided as a single control section or a plurality of control sections. In this case, the above-described single control section or at least one of the plurality of control sections executes the pre-fusion-splicing measurement step S12 or the post-fusion-splicing measurement step S16 by using the single light source or at least one of the plurality of light sources and the single light detector or at least one of the plurality of light detectors. Further, the above-described single control section or at least one of the plurality of control sections executes the alignment step S13 or the abutting step S14 by using the single alignment mechanism or at least one of the plurality of alignment mechanisms. Furthermore, the above-described single control section or at least one of the plurality of control sections executes the fusion splicing step S15 by using the single heating section or at least one of the plurality of heating sections. Moreover, the above-described single control section or at least one of the plurality of control sections executes the determination step S17 or the estimation step S18.

The preparation step S11 is a step in which a user sets the optical fibers OF1 and OF2 to the fusion splicing device 1. The optical fibers OF1 and OF2 are held by the alignment mechanism of the fusion splicing device 1 such that center axes of the optical fibers OF1 and OF2 are in parallel with the z-axis. (a) of Fig. 2 illustrates a state of the optical fibers OF1 and OF2 having been subjected to the preparation step S11. Note that, in the preparation step S11, electric discharge for cleaning may be carried out. The electric discharge for cleaning is a step of cleaning surfaces of the optical fibers OF1 and OF2 by disappearing a foreign matter(s), such as a glass chip(s) adhered to the surfaces of the optical fibers OF1 and OF2, by blowing away and/or dissolving the foreign matter(s). It is preferable that the electric discharge for cleaning be carried out in such a manner as to clean surfaces of portions of the optical fibers OF1 and OF2 which portions are to be subjected to measurement in the later-described pre-fusion-splicing measurement step S12. In addition, a checking task of checking whether or not cleaning of the surfaces of the optical fibers OF1 and OF2 has been completed may be further carried out by using the light source 11 and the light detector 12. Furthermore, the electric discharge for cleaning and the checking task may be carried out repeatedly until it is confirmed that cleaning of the surfaces of the optical fibers OF1 and OF2 has been completed.

As discussed above, an entity carrying out the preparation step S11 may be either a worker or a device. Further, this device may be a mechanism (a part of the fusion splicing device 1) incorporated in the fusion splicing device 1 or a mechanism (e.g., a robot) separated from the fusion splicing device 1.

When the preparation step S11 is completed, the pre-fusion-splicing measurement step S12 is then carried out. The pre-fusion-splicing measurement step S12 is a step in which the fusion splicing device 1 measures (a) center positions or outer periphery positions and (b) core positions or marker positions of the optical fibers OF1 and OF2 having not been fusion-spliced yet. Note that the measurement of the center positions or outer periphery positions of the optical fibers OF1 and OF2 may be omitted, if not necessary. In the pre-fusion-splicing measurement step S12, the control section of the fusion splicing device 1 moves the optical fiber OF1 in a z-axis negative direction by using the alignment mechanism of the fusion splicing device 1. Consequently, an end portion of the optical fiber OF1 is positioned at a location between the light source 11 and the light detector 12. Further, the control section of the fusion splicing device 1 moves the optical fiber OF2 in a z-axis positive direction by using the alignment mechanism of the fusion splicing device 1. Consequently, an end portion of the optical fiber OF2 is positioned at a location between the light source 11 and the light detector 12. As a result, a distance d between the end surface of the optical fiber OF1 and the end surface of the optical fiber OF2 is sufficiently short.

The distance d may be so short that the below-described detection process can be carried out. For example, $0 < d \leq 200 \mu$m. The distance d may be more than 200 $\mu$m, provided that it allows execution of the below-described detection process. In the present embodiment, the distance d is 50 $\mu$m. To the end portions of the optical fibers OF1 and OF2, the above-described holding member, for example, fiber holders may be attached in advance. In a case where each of the optical fibers OF1 and OF2 includes a marker, each of the fiber holders is attached to a respective one of the optical fibers OF1 and OF2 such that a specific relation between a position of a reference surface of the fiber holder and the marker position of the optical fiber is satisfied.

The control section of the fusion splicing device 1 measures, by using the light source 11 and the light detector 12, direction dependencies of (1) an intensity I1 of light (hereinafter, referred to as a "transmitted light intensity I1") which has been emitted from the light source 11, has entered the end portion of the optical fiber OF1 via the side surface of the optical fiber OF1, has transmitted through the end portion of the optical fiber OF1, and has emitted from the end portion of the optical fiber OF1 via the side surface of the optical fiber OF1 and (2) an intensity I2 of light (hereinafter, referred to as a "transmitted light intensity I2") which has been emitted from the light source 11, has entered the end portion of the optical fiber OF2 via the side surface of the optical fiber OF2, has transmitted through the end portion of the optical fiber OF2, and has emitted from the end portion of the optical fiber OF2 via the side surface of the optical fiber OF2. In a case where the photodiode or the photoconductor is used as the light detector 12, the control section of the fusion splicing device 1 repeatedly carries out the detection process for detecting the transmitted light intensities I1 and I2, while rotating the optical fibers OF1 and OF2 about the z-axis or while rotating the light source 11 and the light detector 12 about the z-axis. Consequently, the control section of the fusion splicing device 1 obtains data indicative of the direction dependency of the transmitted light intensity I1 of the optical fiber OF1 and data indicative of the direction dependency of the transmitted light intensity I2 of the optical fiber OF2. Here, the data obtained by each detection process is, for example, a luminance value indicative of an intensity of light having been detected by the photodiode or the photoconductor. In this case, the data indicative of the direction dependencies of the transmitted light intensities I1 and I2 obtained as a result of repetition of the detection process is a one-dimensional array of the luminance values indicative of the intensities of the light detected by the photodiode or the photoconductor. Meanwhile, in a case where the light detector 12 is used as a camera, the control section of the fusion splicing device 1 carries out (a) an image capturing process for capturing an image of the end portions of the optical fibers OF1 and OF2 and (b) a calculation process of deriving, from the image obtained as a result of the image capturing process, the transmitted light intensities I1 and I2 of the optical fibers OF1 and OF2 (for example, an integration process, an average process, or a weighted average process) while rotating the optical fibers OF1 and OF2 about the z-axis or while rotating the light source 11 and the light detector 12 about the z-axis. Consequently, the control section of the fusion splicing device 1 obtains data indicative of the direction dependency of the transmitted light intensity I1 of the optical fiber OF1 and data indicative of the direction dependency of the transmitted light intensity I2 of the optical fiber OF2. In this case, data obtained in each image capturing process is, for example, a two-dimensional array (i.e., an image) of luminance values indicative of intensities of light detected by cells constituting an image sensor of the camera, and data obtained in each calculation process is, for example, an integration value, an average value, or a weighted average value (hereinafter, referred to as an "integration value, etc.") of the intensities detected by the cells constituting the image sensor of the camera. In this case, the data indicative of the direction dependencies of the transmitted light intensities I1 and I2 obtained as a result of repetition of the image capturing process and the calculation process is a one-dimensional array of integration values, etc. of the intensities detected by the cells constituting the image sensor of the camera. Then, the control section of the fusion splicing device 1 identifies the center position or the outer periphery position and the core position or the marker position of the optical fiber OF1 on the basis of (the data indicative of) the direction dependency of the transmitted light intensity I1 of the optical fiber OF1. Further, the control section of the fusion splicing device 1 identifies the center position or the outer periphery position and the core position or the marker position of the optical fiber OF2 on the basis of (the data indicative of) the direction dependency of the transmitted light intensity I2 of the optical fiber OF2. (b) of Fig. 2 illustrates a state of the optical fibers OF1 and OF2 which are being subjected to the pre-fusion-splicing measurement step S12.

In the pre-fusion-splicing measurement step S12, the directions in which the optical measurement (the above-described detection process or image capturing process) is carried out may be distributed within a range of 360° or a range of less than 360°. In other words, a range for defining the direction dependencies of the transmitted light intensities I1 and I2 of the optical fibers OF1 and OF2 (this range corresponds to a range in a horizontal axis in a graph) may be 360° or less than 360°. In a case where the range of the directions in which the optical measurement is carried out is less than 360°, it is preferable that, in the preparation step S11, (1) rough rotational alignment of the optical fibers OF1 and OF2 be carried out after the optical fibers OF1 and OF2 are set to the alignment mechanism of the fusion splicing device 1 or (2) the optical fibers OF1 and OF2 be set to the alignment mechanism of the fusion splicing device 1 after the rough rotational alignment of the optical fibers OF1 and OF2 is carried out, in order that the marker positions can be identified by the optical measurement carried out in a direction within this range in the pre-fusion-splicing measurement step S12. In the former case, the rough rotational alignment is carried out by the alignment mechanism of the fusion splicing device 1. Meanwhile, in the latter case, the rough rotational alignment is carried out by a worker or a device other than the fusion splicing device 1. In either of the cases, it is possible to shorten, in the pre-fusion-splicing measurement step S12, a time required to identify the marker positions of the optical fibers OF1 and OF2.

When the pre-fusion-splicing measurement step S12 is completed, the alignment step S13 is then carried out. The alignment step S13 is a step in which the fusion splicing device 1 carries out alignment of the optical fibers OF1 and OF2. In the alignment step S13, by using the alignment mechanism of the fusion splicing device 1, the control section of the fusion splicing device 1 moves the optical fibers OF1 and OF in the x-axis direction and/or the y-axis direction such that the center positions or the outer periphery positions of the optical fibers OF1 and OF2 having been identified in the pre-fusion-splicing measurement step S12 match each other. Further, by using the alignment mechanism of the fusion splicing device 1, the control section of the fusion splicing device 1 rotates the optical fibers OF1 and OF2 about the z-axis such that the core positions of the optical fibers OF1 and OF2 having been specified in the pre-fusion-splicing measurement step S12 match each other or the marker positions of the optical fibers OF1 and OF2 having been identified in the pre-fusion-splicing measurement step S12 satisfy a predetermined relation. The movement in the x-axis direction and/or the y-axis direction and the rotation about the z-axis may be carried out in any order. After the movement in the x-axis direction and/or the y-axis direction is carried out, the rotation about the z-axis may be carried out. Alternatively, after the rotation about the z-axis is carried out, the movement in the x-axis direction and/or the y-axis direction may be carried out. (c) of Fig. 2 illustrates a state of the optical fibers OF1 and OF2 which are being subjected to the alignment step S13.

In the configuration employed by the present embodiment, the pre-fusion-splicing measurement step S12 is carried out once, and thereafter the alignment step S13 is carried out once. However, the present invention is not limited to this configuration. Alternatively, for example, such a configuration may be employed that the pre-fusion-splicing measurement step S12 and the alignment step S13 are executed alternately and repeatedly so as to carry out the alignment work in steps.

When the alignment step S13 is completed, the abutting step S14 is then carried out. The abutting step S14 is a step in which the fusion splicing device 1 makes the end surface of the optical fiber OF1 abut on the end surface of the optical fiber OF2. In the abutting step S14, by using the alignment mechanism of the fusion splicing device 1, the control section of the fusion splicing device 1 moves the optical fiber OF1 in the z-axis negative direction by d/2 (in the present embodiment, approximately 5 μm). Further, by using the alignment mechanism of the fusion splicing device 1, the control section of the fusion splicing device 1 moves the optical fiber OF2 in the z-axis positive direction by d/2 (in the present embodiment, approximately 5 μm). (d) of Fig. 2 illustrates a state of the optical fibers OF1 and OF2 having been subjected to the abutting step S14. Note that, in the abutting step S14, pre-discharge may be carried out. The pre-discharge is a step of softening tip ends of the optical fibers OF1 and OF2. By carrying out the pre-discharge and thereafter making the tip ends of the optical fibers OF1 and OF2 abut on each other, it is possible to reliably bring the tip ends of the optical fibers OF1 and OF2 into close contact with each other. In this case, it is preferable that an amount of movement of the optical fibers OF1 and OF2 be set at d/2+ε. The symbol "ε" denotes an amount of additional movement for causing the tip ends of optical fibers OF1 and OF2 to overlap each other. For example, "ε" may be 10 μm. With this, it is possible to more reliably bring the tip ends of the optical fibers OF1 and OF2 into close contact with each other.

When the abutting step S14 is completed, the fusion splicing step S15 is then carried out. The fusion splicing step S15 is a step in which the fusion splicing device 1 carries out fusion-splicing of the optical fibers OF1 and OF2. In the fusion splicing step S15, the control section of the fusion splicing device 1 heats and melts the end portions of the optical fibers OF1 and OF2 by using the heating section 13 (e.g., by causing arc discharge by using the electrode pair). Then, the end portions of the optical fibers OF1 and OF2, having been heated and melted, are solidified by natural cooling. Consequently, the optical fibers OF1 and OF2 are fusion-spliced to each other. (e) of Fig. 2 illustrates a state of the optical fibers OF1 and OF2 having been subjected to the fusion splicing step S15.

In the description below, a portion of the optical fibers OF1 and OF2 in which portion a change in a refractive index distribution occurs due to heating in the fusion splicing step S15 will be referred to as a "heat affected portion". In (e) of Fig. 2, the heat affected portion is indicated by hatching. The heat affected portion has a width extending not less than approximately 0.3 mm and not more than approximately 2 mm from a center of the heating section 13 (in the present embodiment, the electrode pair) in the z-axis positive direction and the z-axis negative direction.

When the fusion splicing step S15 is completed, the post-fusion-splicing measurement step S16 is then carried out. The post-fusion-splicing measurement step S16 is a step in which the fusion splicing device 1 measures the core positions or the marker positions of the optical fibers OF1 and OF2 having been fusion-spliced. In the post-fusion-splicing measurement step S16, the control section of the fusion splicing device 1 measures the direction dependencies of the transmitted light intensity I1 of the optical fiber OF1 and the transmitted light intensity I2 of the optical fiber OF2. In a case where the photodiode or the photoconductor is used as the light detector 12, the control section of the fusion splicing device 1 repeatedly carries out the detection process for detecting the transmitted light intensities I1 and I2, while rotating the optical fibers OF1 and OF2 about the z-axis or while rotating the light source 11 and the light detector 12 about the z-axis. Consequently, the control section of the fusion splicing device 1 obtains data indicative of the direction dependency of the transmitted light intensity I1 of the optical fiber OF1 and data indicative of the direction dependency of the transmitted light intensity I2 of the optical fiber OF2. In this case, as in the pre-fusion-splicing measurement step S12, the data indicative of the direction dependencies of the transmitted light intensities I1 and I2 is, for example, a one-dimensional array of luminance values indicative of the intensities of the light detected by the photodiode or the photoconductor. Meanwhile, in a case where the light detector 12 is used as a camera, the control section of the fusion splicing device 1 carries out (a) an image capturing process for capturing an image of the end portions of the optical fibers OF1 and OF2 and (b) a calculation process of deriving, from the image obtained as a result of the image capturing process, the transmitted light intensities I1 and I2 of the optical fibers OF1 and OF2, while rotating the optical fibers OF1 and OF2 about the z-axis or while rotating the light source 11 and the light detector 12 about the z-axis. Consequently, the control section of the fusion splicing device 1 obtains the data indicative of the direction dependency of the transmitted light intensity I1 of the optical fiber OF1 and data indicative of the direction dependency of the transmitted light intensity I2 of the optical fiber OF2. In this case, as in the pre-fusion-splicing measurement step S12, the data indicative of the direction dependencies of the transmitted light intensities I1 and I2 obtained as a result of repetition of the image capturing process and the calculation process is, for example, a one-dimensional array of integration values, etc. of the intensities detected by the cells constituting the image sensor of the camera. Then, the control section of the fusion splicing device 1 identifies the core position or the marker position of the optical fiber OF1 on the basis of (the data indicative of) the direction dependency of the transmitted light intensity I1 of the optical fiber OF1. Further, the control section of the fusion splicing device 1 identifies the core position or the marker position of the optical fiber OF2 on the basis of (the data indicative of) the direction dependency of the transmitted light intensity I2 of the optical fiber OF2.

In the post-fusion-splicing measurement step S16, transmitted light intensities I1 and I2 in the heat affected portion of the optical fibers OF1 and OF2 may be measured or transmitted light intensities I1 and I2 in a non-heat affected portion of the optical fibers OF1 and OF2 may be measured. (f) of Fig. 2 illustrates a state of the optical fibers OF1 and OF2 which are being subjected to the post-fusion-splicing measurement step S16 of the former case, whereas (g) and (h) of Fig. 2 each illustrate a state of the optical fibers OF1 and OF2 which are being subjected to the post-fusion-splicing measurement step S16 of the latter case. In the post-fusion-splicing measurement step S16, both (a) the transmitted light intensities I1 and I2 in the heat affected portion of the optical fibers OF1 and OF2 and (b) the transmitted light intensities I1 and I2 in the non-heat affected portion of the optical fibers OF1 and OF2 may be measured. Alternatively, in the post-fusion-splicing measurement step S16, transmitted light intensities I1 and I2 in the end portions of the optical fibers OF1 and OF2 may be measured or transmitted light intensities I1 and I2 in a portion other than the end portions of the optical fibers OF1 and OF2 may be measured. Note, however, that in a case where the core is formed in a spiral form, the core position can largely vary depending on a position where the measurement is carried out; or, in a case where the marker is formed in a spiral form, the marker position can largely vary depending on a position where the measurement is carried out. Therefore, in such a case, it is preferable to measure the transmitted light intensities I1 and I2 in the end portions of the optical fibers OF1 and OF2. Further, after the fusion splicing step S15 is completed, an external appearance test may be carried out before the post-fusion-splicing measurement step S16 is started. The external appearance test is a step of determining whether or not the fusion-splicing has been successfully carried out, on the basis of the presence or absence of an air bubble, the presence or absence of a foreign matter, an amount of positional deviation of the cladding, and/or the like.

In a case where the post-fusion-splicing measurement step S16 illustrated in (g) and (h) of Fig. 2 is carried out, the control section of the fusion splicing device 1 moves the optical fibers OF1 and OF2 in the z-axis negative direction by using the alignment mechanism (process 1), detects the transmitted light intensity I1 of the optical fiber OF1 by using the light source 11 and the light detector 12 as shown in (g) of Fig. 2 (process 2), moves the optical fibers OF1 and OF2 in the z-axis positive direction by using the alignment mechanism (process 3), and detects the transmitted light intensity I1 of the optical fiber OF1 by using the light source 11 and the light detector 12 as shown in (h) of Fig. 2 (process 4). Here, an amount of the movement of the optical fibers OF1 and OF2 in the process 1 is preferably not less than 0.3 mm, and more preferably not less than 0.5 mm. Further, an amount of the movement of the optical fibers OF1 and OF2 in the process 3 is preferably twice the amount of the movement of the optical fibers OF1 and OF2 in the process 1. In a case where a camera capable of putting a heat affected portion of the optical fibers OF1 and OF2 and non-heat affected portions on both sides of the heat affected portion into an angular field at once is used as the light detector 12, the process 1 and the process 3 may be omitted and the process 2 and the process 3 may be executed at once (the transmitted light intensity I1 of the optical fiber OF1 and the transmitted light intensity I2 of the optical fiber OF2 may be measured at once).

When the post-fusion-splicing measurement step S16 is completed, the determination step S17 is then carried out. The determination step S17 is a step in which the fusion splicing device 1 determines whether the fusion-splicing of the optical fibers OF1 and OF2 has been carried out properly. In the determination step S17, the control section of the fusion splicing device 1 determines whether or not the core positions of the optical fibers OF1 and OF2 having been identified in the post-fusion-splicing measurement step S16 match each other or whether or not the marker positions of the optical fibers OF1 and OF2 having been identified in the post-fusion-splicing measurement step S16 satisfy a predetermined relation. Note here that the determination result obtained when the core positions of the optical fibers OF1 and OF2 match each other and the marker positions of the optical fibers OF1 and OF2 satisfy the predetermined relation indicates that the fusion-splicing has been successfully carried out. Meanwhile, the determination result obtained when the core positions of the optical fibers OF1 and OF2 do not match each other or the marker positions of the optical fibers OF1 and OF2 do not satisfy the predetermined relation indicates that the fusion-splicing has been failed. The determination result may or may not be notified to a user. There is no particular limitation on a notification method employed in a case where the determination result is notified to the user. Examples of the method encompass illuminating a lamp, sounding a buzzer, outputting an image message via a display, or outputting an audio message via a speaker when the core positions of the optical fibers OF1 and OF2 do not match each other or when the marker positions of the optical fibers OF1 and OF2 do not satisfy the predetermined relation.

Note here that the determination as to whether or not the core positions of the optical fibers OF1 and OF2 match each other can also be made by determining whether or not a degree of overlap between (a) a peak that is one of peaks in a graph indicative of the direction dependency of the transmitted light intensity I1 and that corresponds to the core and (b) a peak that is one of peaks in a graph indicative of the direction dependency of the transmitted light intensity I2 and that corresponds to the core is not less than a predetermined threshold. Further, the determination as to whether or not the marker positions of the optical fibers OF1 and OF2 match each other can also be made by determining whether or not a degree of overlap between (a) a peak that is one of the peaks in the graph indicative of the direction dependency of the transmitted light intensity I1 and that corresponds to the marker and (b) a peak that is one of the peaks in the graph indicative of the direction dependency of the transmitted light intensity I2 and that corresponds to the marker is not less than a predetermined threshold.

Moreover, the determination as to whether or not the core positions of the optical fibers OF1 and OF2 match each other can also be made by determining whether or not a difference between (a) a direction (angle) in which such a peak exists that is one of the peaks in the graph indicative of the direction dependency of the transmitted light intensity I1 and that corresponds to the core and (b) a direction (angle) in which such a peak exists that is one of the peaks in the graph indicative of the direction dependency of the transmitted light intensity I2 and that corresponds to the core is within a predetermined range. Furthermore, the determination as to whether or not the marker positions of the optical fibers OF1 and OF2 satisfy a predetermined relation can also be made by determining whether or not a difference between (a) a direction (angle) in which such a peak exists that is one of the peaks in the graph indicative of the direction dependency of the transmitted light intensity I1 and that corresponds to the marker and (b) a direction (angle) in which such a peak exists that is one of the peaks in the graph indicative of the direction dependency of the transmitted light intensity I2 and that corresponds to the marker is within a predetermined range.

When the determination step S17 is completed, the estimation step S18 is then carried out. The estimation step S18 is a step of estimating a coupling efficiency or a connection loss of the optical fibers OF1 and OF2. In the estimation step S18, the control section of the fusion splicing device 1 estimates a degree of the coupling efficiency or the connection loss of the optical fibers OF1 and OF2 on the basis of the core positions in the optical fibers OF1 and OF2 having been identified in the post-fusion-splicing measurement step S16. The control section of the fusion splicing device 1 may or may not notify the user of the estimation result obtained in the estimation step S18. There is no particular limitation on a notification method employed in a case where the estimation result is notified to the user. Examples of the method encompass illuminating a lamp, sounding a buzzer, outputting the assumed coupling efficiency or connection loss as an image via a display, and outputting the assumed coupling efficiency or connection loss as an audio message via a speaker when the assumed coupling efficiency is lower than a predetermined threshold or the assumed connection loss exceeds a predetermined threshold. By notifying the estimation result to the user, it is possible to notify the user of the degree of the coupling efficiency or the connection loss of the optical fibers OF1 and OF2.

Note that core numbers are identification numbers given to the respective cores in the multi-core fiber, and are set in accordance with distances from the marker, for example. In one example, in a case where a plurality of cores are arranged on a circumference, the core numbers of the respective cores can be set in the following manner. First, a core number given to a core which is closest to the marker is "1". Then, a core number given to a core which is second closest to the marker is "2". Then, assuming that the circumference of the circle is traced so as to pass through the core closest to the marker and the core second closest to the marker in this order, a third core to be traced is given a core number "3", a fourth core to be traced is given a core number "4", ... and an n-th core to be traced is given a core number "n". Further, instead of setting the core numbers by referring to the marker, setting of the core numbers may be carried out by referring to a mark (e.g., a symbol and/or a character(s)) formed on a surface of the cladding. In a case where the cladding has a cover, the core numbers may be set by referring to a mark formed on a surface of the cover. In a case where a connector is attached to an end portion of the multi-core fiber, such a configuration may be employed that setting for the cores is made by referring to a key (e.g., a projection) formed in the connector. In a case where a flat portion is provided to a side surface of the cladding in such a manner that the cladding has an anisotropic cross sectional shape (e.g., D-type), for example, the core numbers may be set by referring to the flat portion. In a case where a cutout is provided to the side surface of the cladding, the core numbers may be set by referring to the cutout. In a case where the multi-core fiber is connected to a transceiver, the core numbers of the cores may be set by referring to numbers of ports of the transceiver which ports are connected to the respective cores.

In the estimation step S18, in addition to or instead of the estimation (hereinafter, referred to as "first estimation") of the coupling efficiency or the connection loss of the optical fibers OF1 and OF2, at least one of the following kinds of assumption may be carried out. That is, on the basis of the core position and the marker position of the optical fiber OF1 having been identified in the post-fusion-splicing measurement step S16, a correspondence relation between (a) the core numbers of the cores of the optical fiber OF1 and (b) the core numbers of the cores, which are optically coupled to the cores of the optical fiber OF1, of the optical fibers OF2 may be estimated. Hereinafter, such estimation will sometimes be referred to as "second estimation". Further, on the basis of the marker position of the optical fiber OF1 having been identified in the post-fusion-splicing measurement step S16, which of a plurality of regions obtained by dividing the cladding of the optical fiber OF1 includes the marker of the optical fiber OF1 may be estimated (hereinafter, such estimation will sometimes be referred to as "third estimation"). Moreover, on the basis of the marker position of the optical fiber OF2 having been identified in the post-fusion-splicing measurement step S16, which of a plurality of regions obtained by dividing the cladding of the optical fiber OF2 includes the marker of the optical fiber OF2 may be estimated. Hereinafter, these types of estimation will sometimes be referred to as "third estimation". Moreover, on the basis of the marker positions of the optical fibers OF1 and OF2 having been identified in the post-fusion-splicing measurement step S16, either of or both of (a) an amount of overlap between the markers of the optical fibers OF1 and OF2 and (b) an amount of deviation between the markers of the optical fibers OF1 and OF2 may be estimated. Hereinafter, such estimation will sometimes be referred to as "fourth estimation". Examples of the degree of overlap between the markers include (a) an area of a region where the markers of the optical fibers OF1 and OF2 overlap each other and (b) a ratio of the area of this region to an area of the marker of the optical fiber OF1 or to an area of the marker of the optical fiber OF2. An example of the amount of deviation between the markers can be a difference (distance) between the marker positions in a radial direction and/or a circumferential direction of the cladding. Another example which can be regarded as the amount of deviation between the markers is an angle (difference) made by (a) a direction (angle) of the marker of the optical fiber OF1 as viewed from the center of the cladding and (b) a direction (angle) of the marker of the optical fiber OF2 as viewed from the center of the cladding. Furthermore, on the basis of the core positions of the optical fibers OF1 and OF2 having been identified in the post-fusion-splicing measurement step S16, either of or both of (a) an amount of overlap between the cores of the optical fiber OF1 and the cores, which are optically coupled to the cores of the optical fiber OF1, of the optical fiber OF2 and (b) an amount of deviation between the cores of the optical fiber OF1 and the cores, which are optically coupled to the cores of the optical fiber OF1, of the optical fiber OF2. Hereinafter, such estimation will sometimes be referred to as "fifth estimation". Examples of the amount of overlap between the cores include (a) an area of a region where the cores of the optical fiber OF1 and the cores of the optical fiber OF2 overlap each other and (b) a ratio of the area of this region to an area of the cores of the optical fiber OF1 or to an area of the cores of the optical fiber OF2. An example of the amount of deviation between the cores can be a difference (distance) between the core positions in a radial direction and/or a circumferential direction of the cladding. Another example which can be regarded as the amount of deviation between the cores is an angle (difference) made by (a) a direction (angle) of one of the cores of the optical fiber OF1 as viewed from the center of the cladding and (b) a direction (angle) of one of the cores, which is connected to the one of the cores of the optical fiber OF1, of the optical fiber OF2 as viewed from the center of the cladding. Further, on the basis of the core positions and markers of the optical fibers OF1 and OF2 having been identified in the post-fusion-splicing measurement step S16, polarities of the optical fibers OF1 and OF2 may be estimated (each of these polarities indicates whether an end surface which is to be fusion-spliced is the later-described end surface $\sigma1$ or end surface $\sigma2$). Hereinafter, such estimation will sometimes be referred to as "sixth estimation". The control section of the fusion splicing device 1 may or may not notify the user of these estimation results. There is no particular limitation on a notification method employed in a case where these estimation are notified to the user. Examples of the method encompass outputting these estimation results as an image via a display or outputting these estimation results as an audio via a speaker. By notifying these estimation results to the user, it is possible to allow the user acknowledge these estimation results.

As discussed above, the test method S10 in accordance with the present embodiment includes: the fusion splicing step S15 of fusion-splicing the optical fibers OF1 and OF2 each having a cross section having an anisotropic refractive index distribution; and the post-fusion-splicing measurement step S16 of identifying the core position or the marker position of the optical fiber OF1 on the basis of a spatial distribution or a direction dependency of the transmitted light intensity I1 of the optical fiber OF1 and identifying the core position or the marker position of the optical fiber OF2 on the basis of a spatial distribution or a direction dependency of the transmitted light intensity I2 of the optical fiber OF2, the post-fusion-splicing measurement step S16 being carried out after the fusion splicing step S15. Thus, with the test method S10 in accordance with the present embodiment, it is possible to determine, on the basis of the measurement result obtained in the post-fusion-splicing measurement step S16, whether or not the fusion-splicing has been successfully carried out. Further, by carrying out the fusion splicing step S15, at least part of a foreign matter(s) adhered to a surface(s) of the optical fibers OF1 and OF2 before the fusion splicing step S15 can be disappeared. Consequently, in comparison to the data obtained by the pre-fusion-splicing measurement step S12, the data obtained by the post-fusion-splicing measurement step S16 can be data including less noise caused by the foreign matter(s) adhered to the surface(s) of the optical fibers OF1 and OF2. Furthermore, in comparison to the pre-fusion-splicing measurement step S12 in which the optical fibers OF1 and OF2 have not been fusion-spliced to each other yet, the post-fusion-splicing measurement step S16 in which the optical fibers OF1 and OF2 have been already fusion-spliced to each other has less possibility of causing twisting of the optical fibers OF1 and OF2. Consequently, in comparison to the data obtained by the pre-fusion-splicing measurement step S12, the data obtained by the post-fusion-splicing measurement step S16 can be data including less noise caused by the twisting of the optical fibers OF1 and OF2. Therefore, even in a case where the pre-fusion-splicing measurement step S12 cannot properly identify the core positions or the marker positions due to a foreign matter(s), it is highly likely that the post-fusion-splicing measurement step S16 can properly identify the core positions and the marker positions.

Note that determining, after fusion-splicing is carried out, whether or not the fusion-splicing has been successfully carried out has the following significances. The description here will study a manufacturing method according to which a fiber connection body including three optical fibers is manufactured. This manufacturing method includes: a first connection step of fusion-splicing a first optical fiber and a second optical fiber to each other; and a second connection step of fusion-splicing the first optical fiber or the second optical fiber to a third optical fiber. In a case where the fusion splicing method S1 in accordance with the present embodiment is applied to the first connection step, it is possible to acknowledge, before carrying out the second connection step, whether or not the fusion-splicing of the first optical fiber and the second optical fiber has been successfully carried out. Therefore, if the fusion-splicing of the first optical fiber and the second connection step has been failed, it is possible to carry out the fusion-splicing of the first optical fiber and the second connection step again before carrying out the second connection step. This makes it possible to avoid carrying out the second connection step which is not necessary. This can provide a manufacturing method with higher efficiency. The same applies also to a manufacturing method for manufacturing a fiber connection body including four or more optical fibers.

The test method S10 in accordance with the present embodiment employs a configuration further including the determination step S17 of determining, on the basis of the core positions or the marker positions of the optical fibers OF1 and OF2 having been identified in the post-fusion-splicing measurement step S16, whether or not the fusion-splicing has been successfully carried out. Thus, with the fusion splicing method S1 in accordance with the present embodiment, it is possible to automatically determine whether or not the fusion-splicing has been successfully carried out. Therefore, in comparison to a configuration in which the determination as to whether or not the fusion-splicing has been successfully carried out is made by a user, the above configuration makes it easier for the user to acknowledge whether or not the fusion-splicing has been successfully carried out. Particularly, with the configuration in which the determination as to whether or not the fusion-splicing has been successfully carried out is made by the user, a possibility of occurrence of an erroneous determination tends to increase in a case where a complicated determination criterion is employed or in a case where the determination criterion has been changed. However, with the configuration in which the determination as to whether or not the fusion-splicing has been successfully carried out is automatically made, such an erroneous determination hardly occurs.

The test method S10 in accordance with the present embodiment employs such a configuration that: each of the optical fibers OF1 and OF2 is an optical fiber including a marker; and (a) in a case where the marker positions of the optical fibers OF1 and OF2 having been identified in the post-fusion-splicing measurement step S16 satisfy a predetermined relation, it is determined, in the determination step S17, that the fusion-splicing has been successfully carried out or (b) in a case where the marker positions of the optical fibers OF1 and OF2 having been identified in the post-fusion-splicing measurement step S16 do not satisfy a predetermined relation, it is determined, in the determination step S17, that the fusion-splicing has been failed. Therefore, with the test method S10 in accordance with the present embodiment, it is possible to properly carry out an automatic determination as to whether or not the fusion-splicing has been successfully carried out.

The test method S10 in accordance with the present embodiment employs such a configuration that, in the pre-fusion-splicing measurement step S12, the marker position of the optical fiber OF1 is identified on the basis of the spatial distribution or the direction dependency of the transmitted light intensity I1 of the optical fiber OF1 and the marker position of the optical fiber OF2 is identified on the basis of the direction dependency of the transmitted light intensity I2 of the optical fiber OF2. Therefore, with the test method S10 in accordance with the present embodiment, the pre-fusion-splicing measurement step S12 can be carried out in a similar manner to the post-fusion-splicing measurement step S16 by using the light source 11 and the light detector 12 which are used in the post-fusion-splicing measurement step S16.

The test method S10 in accordance with the present embodiment employs a configuration further including the estimation step of estimating, on the basis of either of or both of the core positions and the marker positions of the optical fibers OF1 and OF2 having been identified in the post-fusion-splicing measurement step S16, at least one selected from the group consisting of (1) to (6): (1) the coupling efficiency or the connection loss of the optical fibers OF1 and OF2; (2) the correspondence relation between the core numbers of the cores of the optical fiber OF1 and the core numbers of the cores, which are optically coupled to the cores of the optical fiber OF1, of the optical fiber OF2; (3) which of the plurality of regions obtained by dividing the cladding of the optical fiber OF includes the marker of the optical fiber OF1 and which of the plurality of regions obtained by dividing the cladding of the optical fiber OF2 includes the marker of the optical fiber OF2; (4) the amount of overlap or deviation between the markers of the optical fibers OF1 and OF2; (5) the amount of overlap or deviation between the cores of the optical fiber OF1 and the cores, which are optically coupled to the cores of the optical fiber OF1, of the optical fiber OF2; and (6) the polarities of the optical fibers OF1 and OF2. Thus, with the test method S10 in accordance with the present embodiment, it is possible to automatically derive various kinds of estimated values. Consequently, in comparison to a case where the user derives various kinds of estimated values, the user can more easily acknowledge various kinds of estimated values.

In the configuration employed by the present embodiment, each of the pre-fusion-splicing measurement step S12 and the post-fusion-splicing measurement step S16 measures, by using the single light source 11 and the single light detector 12, the direction dependency of the transmitted light intensity I1 of the optical fiber OF1 and the direction dependency of the transmitted light intensity I2 of the optical fiber OF2. However, the present invention is not limited to this. Alternatively, for example, such a configuration may be employed that each of the pre-fusion-splicing measurement step S12 and the post-fusion-splicing measurement step S16 measures the direction dependency of the transmitted light intensity I2 of the optical fiber OF2 by using a light source and a light detector each of which is not the light source or the light detector used to measure the direction dependency of the transmitted light intensity I1 of the optical fiber OF1.

In the configuration employed by the present embodiment, each of the pre-fusion-splicing measurement step S12 and the post-fusion-splicing measurement step S16 (in a case where a heat affected portion is selected as a subject to be measured) measures the direction dependency of the transmitted light intensity I1 of the optical fiber OF1 and the direction dependency of the transmitted light intensity I2 of the optical fiber OF2 at once. However, the present invention is not limited to this. Alternatively, for example, such a configuration may be employed that each of the pre-fusion-splicing measurement step S12 and the post-fusion-splicing measurement step S16 (in a case where a heat affected portion is selected as a subject to be measured) measures the direction dependency of the transmitted light intensity I1 of the optical fiber OF1 and thereafter measures the direction dependency of the transmitted light intensity I1 of the optical fiber OF2 or, conversely, measures the direction dependency of the transmitted light intensity I2 of the optical fiber OF2 and thereafter measures the direction dependency of the transmitted light intensity I2 of the optical fiber OF1.

In the configuration employed by the present embodiment, each of the pre-fusion-splicing measurement step S12 and the post-fusion-splicing measurement step S16 measures the direction dependencies of the transmitted light intensities I1 and I2 of the optical fibers OF1 and OF2 by repeating the detection process (using the photodiode or the photoconductor as the light detector 12) or the image capturing process (using the camera as the light detector 12) while rotating the optical fibers OF1 and OF2 about the z-axis or while rotating the light source 11 and the light detector 12 about the z-axis (such measurement will sometimes be referred to as "side-view scanning"). However, the present invention is not limited to this. Alternatively, for example, such a configuration may be employed that spatial distributions of the transmitted light intensities of the optical fibers OF1 and OF2 are measured by capturing, by using the camera as the light detector 12, an image of the side surfaces of the optical fibers OF1 and OF2 in a specific direction (such measurement will sometimes be referred to as "side-view image capturing"). In this case, instead of identifying the core positions or the marker positions of the optical fibers OF1 and OF2 on the basis of data indicative of the direction dependencies of the transmitted light intensities I1 and I2 of the optical fibers OF1 and OF2, the control section of the fusion splicing device 1 identifies the core positions or the marker positions of the optical fibers OF1 and OF2 on the basis of image data (a two-dimensional array of luminance values) indicative of the spatial distributions of the transmitted light intensities I1 and I2 of the optical fibers OF1 and OF2. As discussed above, the pre-fusion-splicing measurement step S12 may carry out, in addition to identification of the core positions or the marker positions, identification of the center positions or the outer periphery positions. However, identification of the center positions or the periphery positions may be omitted, if not necessary.

The pre-fusion-splicing measurement step S12 may employ a configuration in which the core positions or the marker positions of the optical fibers OF1 and OF2 are identified by end-view image capturing, rather than by the side-view scanning or the side-view image capturing. Note here that the "end-view image capturing" refers to a method for identifying the core positions or the marker positions of the optical fibers OF1 and OF2 on the basis of an image obtained by capturing, by using a camera as the light detector 12, an image of an end surface of the optical fiber in a specific direction. In identifying the center positions or the outer periphery positions and the core positions or the marker positions of the optical fibers OF1 and OF2 by the end-view image capturing, the control section of the fusion splicing device 1 carries out the pre-fusion-splicing measurement step S12 by (1) moving the light detector 12 to a location between the optical fibers OF1 and OF2, (2) directing the light detector 12 toward the end surface of the optical fiber OF1 and capturing an image of the end surface of the optical fiber OF1, (3) directing the light detector 12 toward the end surface of the optical fiber OF2 and capturing an image of the end surface of the optical fiber OF2, and (4) withdrawing the light detector 12 from the location between the optical fibers OF1 and OF2. Alternatively, the control section of the fusion splicing device 1 (1) inserts a mirror between the optical fibers OF1 and OF2 such that a reflection surface of the mirror faces the end surface of the optical fiber OF1 so as to make an angle of 45 degrees with an optical axis of the optical fiber OF1, (2) captures, by using the light detector 12, an image of the end surface of the optical fiber OF1 which image is reflected on the mirror, (3) changes the direction of the mirror such that the reflection surface of the mirror faces the end surface of the optical fiber OF2 so as to make an angle of 45 degrees with an optical axis of the optical fiber OF2, (4) captures, by using the light detector 12, an image of the end surface of the optical fiber OF2 which image is seen on the mirror, and (5) withdraws the mirror from the location between the optical fibers OF1 and OF2. As discussed above, the pre-fusion-splicing measurement step S12 may carry out, in addition to identification of the core positions or the marker positions, identification of the center positions or the periphery positions. However, identification of the center positions or the periphery positions may be omitted, if not necessary.

The side-view scanning or the side-view image capturing has an advantage of being capable of shortening the time required to carry out the pre-fusion-splicing measurement step S12 and the post-fusion-splicing measurement step S16. Meanwhile, the end-view image capturing has an advantage of capable of precisely identifying, in the pre-fusion-splicing measurement step S12, (a) the center positions or the outer periphery positions or (b) the core positions or the marker positions of the optical fibers OF1 and OF2.

In the configuration employed by the present embodiment, the determination as to whether or not the fusion-splicing has been successfully carried out is made by carrying out the determination step S17. However, the present invention is not limited to this. For example, instead of carrying out the determination step S17, another determination step, specifically, a determination step of determining whether or not the fusion-splicing has been successfully on the basis of an estimation result in the estimation step S18 may be carried out. Further, in a case where the estimation result is notified to the user in the estimation step S18, the user may determine, on the basis of the estimation result, whether the fusion-splicing has been successfully carried out. Alternatively, in a case where the estimation result is notified to another device in the estimation step S18, the another device may determine, on the basis of the estimation result, whether the fusion-splicing has been successfully carried out. For example, the following will discuss a case where the above-described first estimation is carried out in the estimation step S18. Then, if the connection loss of the optical fibers OF1 and OF2 is not more than a predetermined first threshold or if the coupling efficiency of the optical fibers OF1 and OF2 is not less than a predetermined second threshold, it is possible to determine that the fusion-splicing has been successfully carried out. Meanwhile, if the connection loss of the optical fibers OF1 and OF2 exceeds the first threshold or if the coupling efficiency of the optical fibers OF1 and OF2 is less than the predetermined second threshold, it is possible to determine that the fusion-splicing has been failed. In this case, the fusion splicing device 1 can determine, on the basis of a value of the coupling efficiency or the connection loss, whether or not the fusion-splicing has been successfully carried out. Further, even without causing the fusion splicing device 1 to actually measure the value of the coupling efficiency or the connection loss, it is possible to determine whether or not the fusion-splicing has been successfully carried out. The following will discuss a case where the above-described second estimation is carried out in the estimation step S18. If a correspondence relation between the core numbers of the optical fibers OF1 and OF2 matches a predetermined correspondence relation, it is possible to determine that the fusion-splicing has been successfully carried out.

Meanwhile, if the correspondence relation between the core numbers of the optical fibers OF1 and OF2 does not match the predetermined correspondence relation, it is possible to determine that the fusion-splicing has been failed. In this case, the fusion splicing device 1 can determine, on the basis of the correspondence relation between the core numbers, whether or not the fusion-splicing has been successfully carried out. Further, even without causing the fusion splicing device 1 to actually measure the value of the coupling efficiency or the connection loss, it is possible to determine whether or not the fusion-splicing has been successfully carried out. The following will discuss a case where the above-described third estimation is carried out in the estimation step S18. If regions of the optical fibers OF1 and OF2 which regions include the respective markers match each other, it is possible to determine that the fusion-splicing has been successfully carried out. Meanwhile, if the regions of the optical fibers OF1 and OF2 which regions include the respective markers do not match each other, it is possible to determine that the fusion-splicing has been failed. In this case, the fusion splicing device 1 can determine, on the basis of the regions including the respective markers, whether or not the fusion-splicing has been successfully carried out. Further, even without causing the fusion splicing device 1 to actually measure the value of the coupling efficiency or the connection loss, it is possible to determine whether or not the fusion-splicing has been successfully carried out. The following will discuss a case where the above-described fourth estimation is carried out in the estimation step S18. If an amount of overlap between the markers of the respective optical fibers OF1 and OF2 is not less than a predetermined threshold, it is possible to determine that the fusion-splicing has been successfully carried out. Meanwhile, if the amount of overlap between the markers of the respective optical fibers OF1 and OF2 is less than the predetermined threshold, it is possible to determine that the fusion-splicing has been failed. Alternatively, if an amount of deviation between the markers of the respective optical fibers OF1 and OF2 is not more than a predetermined threshold, it is possible to determine that the fusion-splicing has been successfully carried out. Meanwhile, if the amount of deviation between the markers of the respective optical fibers OF1 and OF2 exceeds the predetermined threshold, it is possible to determine that the fusion-splicing has been failed. In this case, the fusion splicing device 1 can determine, on the basis of the amount of overlap between the markers or the amount of deviation between the markers, whether or not the fusion-splicing has been successfully carried out. Further, even without causing the fusion splicing device 1 to actually measure the value of the coupling efficiency or the connection loss, it is possible to determine whether or not the fusion-splicing has been successfully carried out. The following will discuss a case where the above-described fifth estimation is carried out in the estimation step S18. If a degree of overlap between the cores of the respective optical fibers OF1 and OF2 is not less than a predetermined threshold, it is possible to determine that the fusion-splicing has been successfully carried out. Meanwhile, if the degree of overlap between the cores of the respective optical fibers OF1 and OF2 is less than the predetermined threshold, it is possible to determine that the fusion-splicing has been failed. Alternatively, if an amount of deviation between the cores of the respective optical fibers OF1 and OF2 is not more than a predetermined threshold, it is possible to determine that the fusion-splicing has been successfully carried out. Meanwhile, if the amount of deviation between the cores of the respective optical fibers OF1 and OF2 exceeds the predetermined threshold, it is possible to determine that the fusion-splicing has been failed. In this case, the fusion splicing device 1 can determine, on the basis of the amount of overlap between the cores or the amount of deviation between the cores, whether or not the fusion-splicing has been successfully carried out. Further, even without causing the fusion splicing device 1 to actually measure the value of the coupling efficiency or the connection loss, it is possible to determine whether or not the fusion-splicing has been successfully carried out. The following will discuss a case where the above-described sixth estimation is carried out in the estimation step S18. If the polarities of the optical fibers OF1 and OF2 are predetermined polarities, it is possible to determine that the fusion-splicing has been successfully carried out. Meanwhile, if the polarities of the optical fibers OF1 and OF2 are not the predetermined polarities, it is possible to determine that the fusion-splicing has been failed. In this case, the fusion splicing device 1 can determine, on the basis of the polarities of the optical fibers OF1 and OF2, whether or not the fusion-splicing has been successfully carried out. Further, even without causing the fusion splicing device 1 to actually measure the value of the coupling efficiency or the connection loss, it is possible to determine whether or not the fusion-splicing has been successfully carried out. In a case where the estimation result is notified to the user in the estimation step S18, the determination step S17 can be omitted. In contrast, in a case where the determination step S17 is carried out, the estimation step S18 may be omitted. In either of the cases, the user can acknowledge whether or not the fusion-splicing has been successfully carried out.

In the present embodiment, (a) the multi-core fibers each including the marker is assumed as the optical fibers OF1 and OF2 and (b) the core and the marker are used as the structure which is to be measured in the post-fusion-splicing measurement step S16 (the "specific structure" recited in the claims). However, this is not limitative. For example, (a) multi-core fibers each including a cladding having a flat portion formed on a side surface of the cladding such that the cladding has a D-shaped cross section can be assumed as the optical fibers OF1 and OF2 and (b) the core and the flat portion can be used as the structure which is to be measured in the post-fusion-splicing measurement step S16 (the "specific structure" recited in the claims). Alternatively, (a) multi-core fibers each including a cladding having a cutout can be assumed as the optical fibers OF1 and OF2 and (b) the core and the cutout can be used as the structure which is to be measured in the post-fusion-splicing measurement step S16 (the "specific structure" recited in the claims). In each of these cases, the marker can be omitted. Any of optical fibers other than the multi-core fiber, for example, a PANDA fiber including a stress applying part or a photonic crystal fiber having a fine structure can be a subject of the test in accordance with the present invention. In the case of the PANDA fiber, the specific structure can be the stress applying part, in place of the marker. In the case of the photonic crystal fiber, the specific structure can be the fine structure, in place of the marker. Also in this case, the above-described effect can be attained. Note that an optical fiber having a cross section having an anisotropic refractive index distribution can be rephrased as an optical fiber having a cross section in which a refractive index distribution does not have rotational symmetry.

Specific Example of Optical Fiber

The following will describe, with reference to Fig. 3, a specific example of the optical fibers OF1 and OF2. The optical fibers OF1 and OF2 in accordance with the present specific example are multi-core fibers MF. In Fig. 3, (a) is a side view of the multi-core fibers MF, (b) is a front view of one end surface σ1 of the multi-core fiber MF viewed in a direction of a sight line E1, and (c) is a front view of the other end surface σ2 of the multi-core fiber MF viewed in a direction of a sight line E2.

Each of the multi-core fibers MF includes n (n is a natural number of not less than 2) cores a1 to an and a cladding b. The cladding b is a cylindrical member. The cladding b is made of silica glass, for example. Each core ai (i is a natural number of not less than 1 and not more than n) is a cylindrical area which is provided inside the cladding b, which has a refractive index higher than that of the cladding b, and which extends in a direction in which the cladding b extends. Each core ai is made of silica glass doped with an updopant such as germanium, for example. The shape of the cladding b only needs to have a columnar shape, and may have any cross-sectional shape. The cross-sectional shape of the cladding b may be a polygonal shape such as a quadrangular shape or a hexagonal shape or may be a barrel shape.

In each of the end surfaces σ1 and σ2, the cores a1 to an are arranged such that the cores a1 to an are linearly symmetric with respect to an axis L1 which is orthogonal to a center axis L0 of the multi-core fiber MF. In each of the end surfaces σ1 and σ2, the cores a1 to an are arranged so as to avoid the axis L1. In other words, in the end surfaces σ1 and σ2, the cores a1 to an are each arranged at a location that does not overlap the axis L1.

The multi-core fiber MF further includes a marker c. The marker c is a columnar area that is provided inside the cladding b, that has a different refractive index from that of the cladding b, and that extends in a direction in which the cladding b extends. The marker c may have any cross-sectional shape. The cross-sectional shape of the marker c may be a circular shape, a triangular shape, or a quadrangular shape, for example. The marker c is made of silica glass doped with a downdopant such as fluorine or boron, for example. In this case, the refractive index of the marker c is lower than that of the cladding b. Alternatively, the marker c is made of silica glass doped with an updopant such as germanium, aluminum, phosphor, or chlorine. In this case, the refractive index of the marker c is higher than that of the cladding b. The marker c may be formed by, for example, a drilling process or a stack-and-draw process. Generally, the marker c has an outer diameter smaller than an outer diameter of the core ai.

In each of the end surfaces σ1 and σ2, a center of the marker c is positioned so as not to overlap the axis L1. In other words, in each of the end surfaces σ1 and σ2, the center (geometric center) of the marker c is positioned at a location that does not overlap the axis L1. Note that the marker c may be positioned so that its center does not overlap the axis L1, and a part of the marker c may overlap the axis L1.

Note that the cores a1 to a4 of the multi-core fiber illustrated in Fig. 3 can be regarded as being arranged so as to be linearly symmetric with respect to an axis L2, can be regarded as being arranged so as to be linearly symmetric with respect to an axis L3, or can be regarded as being arranged so as to be linearly symmetric with respect to an axis L4. Here, the axis L2 is an axis orthogonal both to the center axis L0 and the axis L1. Each of the axes L3 and L4 is an axis which is orthogonal to the center axis L0 and which makes an angle of 45 degrees with the axis L1. However, the arrangement of the cores in the multi-core fiber MF is not limited to the arrangement having four axial symmetry such as the one illustrated in Fig. 3. Any core arrangement which is linearly symmetric with respect to at least one of the four axes can provide general connection and inverted connection, which will be described later.

The multi-core fiber MF may include, in addition to the cores a1 to an each of which is used for communication, a dummy core (not illustrated in Fig. 3, etc.) which is not used for communication. In this case, a core whose position is to be identified in the pre-fusion-splicing measurement step S12 and the post-fusion-splicing measurement step S16 may be (1) only the cores a1 to an each of which is used for communication, (2) only the dummy core which is not used for communication, or (3) both the cores a1 to an each of which is used for communication and the dummy core which is not used for communication.

Specific Example of Connected Part of Optical Fibers

The following will describe, with reference to Figs. 4 to 6, a specific example of a connected part of the optical fibers OF1 and OF2. The description here will deal with a connection mode of the optical fibers OF1 and OF2 in a case where each of the optical fibers OF1 and OF2 is a multi-core fiber MF.

As a connection mode of the optical fibers OF1 and OF2, there are general connection, non-general connection, and inverted connection.

Fig. 4 is a view illustrating a connected part of general connection. In Fig. 4, (a) is a side view of the optical fibers OF1 and OF2, (b) is a front view of an end surface σ2 of the optical fiber OF1 viewed in the direction of the sight line E2, and (c) is a front view of an end surface σ1 of the optical fiber OF2 viewed in the direction of the sight line E1. The connected part of the general connection is (a) a connected part between the end surface σ2 of the optical fiber OF1 and the end surface σ1 of the optical fiber OF2 or (b) a connected part between an end surface σ1 of the optical fiber OF1 and an end surface σ2 of the optical fiber OF2 (the former is shown in Fig. 4). The connected part of the general connection satisfies the following condition.

Condition 1: Each of cores a1 to an in the end surface σ1 of the optical fiber OF2 overlaps any one of cores a1 to an in the end surface σ2 of the optical fiber OF1. Specifically, (1) the core a1 in the end surface σ1 of the optical fiber OF2 overlaps the core a1 in the end surface σ2 of the optical fiber OF1, (2) the core a2 in the end surface σ1 of the optical fiber OF2 overlaps the core a2 in the end surface σ2 of the optical fiber OF1, (3) the core a3 in the end surface σ1 of the optical fiber OF2 overlaps the core a3 in the end surface σ2 of the optical fiber OF1, and (4) the core a4 in the end surface σ1 of the optical fiber OF2 overlaps the core a4 in the end surface σ2 of the optical fiber OF1.

Condition 2a: The marker c in the end surface σ1 of the optical fiber OF2 overlaps the marker c in the end surface σ2 of the optical fiber OF1.

Briefly speaking, the general connection is a connection mode in which the cores a1 to an are optically coupled to the cores a1 to an and in which the markers c are communicated with each other.

Assuming that the optical fibers OF1 and OF2 are the multi-cores fibers MF illustrated in Fig. 3, a connection mode in which the end surface σ2 of the optical fiber OF1 and the end surface σ1 of the optical fiber OF2 are connected to each other can be, instead of the general connection, a connection mode illustrated in Fig. 5, a connection mode illustrated in Fig. 6, or a connection mode illustrated in Fig. 7.

Fig. 5 illustrates a connection mode in which the core a1 of the optical fiber OF1 is connected to the core a2 of the optical fiber OF2. In Fig. 5, (a) is a side view of the optical fibers OF1 and OF2, (b) is a front view of the end surface σ2 of the optical fiber OF1 viewed in the direction of the sight line E2, and (c) is a front view of the end surface σ1 of the optical fiber OF2 viewed in the direction of the sight line E1.

Fig. 6 illustrates a connection mode in which the core a1 of the optical fiber OF1 is connected to the core a3 of the optical fiber OF2. In Fig. 6, (a) is a side view of the optical fibers OF1 and OF2, (b) is a front view of the end surface σ2 of the optical fiber OF1 viewed in the direction of the sight line E2, and (c) is a front view of the end surface σ1 of the optical fiber OF2 viewed in the direction of the sight line E1.

Fig. 7 illustrates a connection mode in which the core a1 of the optical fiber OF1 is connected to the core a4 of the optical fiber OF2. In Fig. 7, (a) is a side view of the optical fibers OF1 and OF2, (b) is a front view of the end surface σ2 of the optical fiber OF1 viewed in the direction of the sight line E2, and (c) is a front view of the end surface σ1 of the optical fiber OF2 viewed in the direction of the sight line E1.

Each of the connection modes illustrated in Figs. 5 to 7 satisfies the condition 1, but does not satisfy the condition 2a. Therefore, each of the connection modes illustrated in Figs. 5 to 7 is not called "general connection" but is called "non-general connection".

Fig. 8 is a view illustrating a connected part of inverted connection. In Fig. 8, (a) is a side view of the optical fibers OF1 and OF2, (b) is a front view of the end surface σ2 of the optical fiber OF1 viewed in the direction of the sight line E2, and (c) is a front view of the end surface σ2 of the optical fiber OF2 viewed in the direction of the sight line E1. The connected part of the inverted connection is (a) a connected part between the end surface σ2 of the optical fiber OF1 and the end surface σ2 of the optical fiber OF2 or (b) a connected part between the end surface σ1 of the optical fiber OF1 and the end surface σ1 of the optical fiber OF2 (the former is shown in Fig. 5). The connected part of the inverted connection satisfies the following condition.

Condition 1: Each of the cores a1 to an in the end surface σ1 of the optical fiber OF2 overlaps any one of the cores a1 to an in the end surface σ2 of the optical fiber OF1. Specifically, (1) the core a1 in the end surface σ2 of the optical fiber OF2 overlaps the core a4 in the end surface σ2 of the optical fiber OF1, (2) the core a2 in the end surface σ2 of the optical fiber OF2 overlaps the core a3 in the end surface σ2 of the optical fiber OF1, (3) the core a3 in the end surface σ2 of the optical fiber OF2 overlaps the core a2 in the end surface σ2 of the optical fiber OF1, and (4) the core a4 in the end surface σ2 of the optical fiber OF2 overlaps the core a1 in the end surface σ2 of the optical fiber OF1.

Condition 2b: The marker c in the end surface σ2 of the optical fiber OF2 overlaps a position x that is linearly symmetric to the marker c of the optical fiber OF1 with respect to the axis L1 in the end surface σ2 of the optical fiber OF1.

Briefly speaking, the inverted connection is a connection mode in which the cores a1 to an are optically coupled to the cores a1 to an and in which the markers c are not communicated with each other.

Assuming that the optical fibers OF1 and OF2 are the multi-cores fibers MF illustrated in Fig. 3, a connection mode in which the end surface σ2 of the optical fiber OF1 and the end surface σ2 of the optical fiber OF2 are connected to each other can be, instead of the inverted connection illustrated in Fig. 8, a connection mode illustrated in Fig. 9, a connection mode illustrated in Fig. 10, or a connection mode illustrated in Fig. 11.

Fig. 9 illustrates a connection mode in which the core a1 of the optical fiber OF1 is connected to the core a3 of the optical fiber OF2. In Fig. 9, (a) is a side view of the optical fibers OF1 and OF2, (b) is a front view of the end surface σ2 of the optical fiber OF1 viewed in the direction of the sight line E2, and (c) is a front view of the end surface σ1 of the optical fiber OF2 viewed in the direction of the sight line E1. The connection mode illustrated in Fig. 9 satisfies the condition 1, and satisfies the condition 2b when the axis L1 is replaced with the axis L3. Thus, the connection mode illustrated in Fig. 9 will be referred to as inverted connection with respect to the axis L3.

Fig. 10 illustrates a connection mode in which the core a1 of the optical fiber OF1 is connected to the core a2 of the optical fiber OF2. In Fig. 10, (a) is a side view of the optical fibers OF1 and OF2, (b) is a front view of the end surface σ2 of the optical fiber OF1 viewed in the direction of the sight line E2, and (c) is a front view of the end surface σ1 of the optical fiber OF2 viewed in the direction of the sight line E1. The connection mode illustrated in Fig. 10 satisfies the condition 1, and satisfies the condition 2b when the axis L1 is replaced with the axis L2. Thus, the connection mode illustrated in Fig. 10 will be referred to as inverted connection with respect to the axis L2.

Fig. 11 illustrates a connection mode in which the core a1 of the optical fiber OF1 is connected to the core a1 of the optical fiber OF2. In Fig. 11, (a) is a side view of the optical fibers OF1 and OF2, (b) is a front view of the end surface σ2 of the optical fiber OF1 viewed in the direction of the sight line E2, and (c) is a front view of the end surface σ1 of the optical fiber OF2 viewed in the direction of the sight line E1. The connection mode illustrated in Fig. 11 satisfies the condition 1, and satisfies the condition 2b when the axis L1 is replaced with the axis L4. Thus, the connection mode illustrated in Fig. 11 will be referred to as inverted connection with respect to the axis L4.

Predetermined Relation

As discussed above, in the alignment step S13, the control section of the fusion splicing device 1 carries out alignment of the optical fibers OF1 and OF2 such that the marker positions of the optical fibers OF1 and OF2 satisfies the "predetermined relation". Further, in the determination step S17, the control section of the fusion splicing device 1 determines whether or not the marker positions of the optical fibers OF1 and OF2 satisfy the "predetermined relation". In a case where each of the optical fibers OF1 and OF2 is the multi-core fiber MF, the "predetermined relation" herein refers to a positional relation between the marker c of the optical fiber OF1 and the marker c of the optical fiber OF2 which positional relation can arise when each of the cores a1 to an of the optical fiber OF1 is optically coupled to any one of the cores a1 to an of the optical fiber OF2.

In a case where each of the optical fibers OF1 and OF2 is the multi-core fiber MF illustrated in Fig. 3, possible examples of the "predetermined relation" include the following eight positional relations.

Relation 1: A positional relation between the marker c of the optical fiber OF1 and the marker c of the optical fiber OF2 which positional relation arises in the connection mode (general connection) illustrated in Fig. 4.

Relation 2: A positional relation between the marker c of the optical fiber OF1 and the marker c of the optical fiber OF2 which positional relation arises in the connection mode (non-general connection) illustrated in Fig. 5.

Relation 3: A positional relation between the marker c of the optical fiber OF1 and the marker c of the optical fiber OF2 which positional relation arises in the connection mode (non-general connection) illustrated in Fig. 6.

Relation 4: A positional relation between the marker c of the optical fiber OF1 and the marker c of the optical fiber OF2 which positional relation arises in the connection mode (non-general connection) illustrated in Fig. 7.

Relation 5: A positional relation between the marker c of the optical fiber OF1 and the marker c of the optical fiber OF2 which positional relation arises in the connection mode (inverted connection with respect to the axis L1) illustrated in Fig. 8.

Relation 6: A positional relation between the marker c of the optical fiber OF1 and the marker c of the optical fiber OF2 which positional relation arises in the connection mode (inverted connection with respect to the axis L3) illustrated in Fig. 9.

Relation 7: A positional relation between the marker c of the optical fiber OF1 and the marker c of the optical fiber OF2 which positional relation arises in the connection mode (inverted connection with respect to the axis L2) illustrated in Fig. 10.

Relation 8: A positional relation between the marker c of the optical fiber OF1 and the marker c of the optical fiber OF2 which positional relation arises in the connection mode (inverted connection with respect to the axis L4) illustrated in Fig. 11.

For example, in a case where the optical fibers OF1 and OF2 are fusion-spliced to each other via general connection (relation 1), the direction dependencies of the transmitted light intensities I1 and I2 of the optical fibers OF1 and OF2 obtained in the post-fusion-splicing measurement step S16 are as shown in (a) of Fig. 12, for example. Meanwhile, in a case where the optical fibers OF1 and OF2 are fusion-spliced to each other via inverted connection with respect to the axis L1 (relation 5), the direction dependencies of the transmitted light intensities I1 and I2 of the optical fibers OF1 and OF2 obtained in the post-fusion-splicing measurement step S16 are as shown in (b) of Fig. 12, for example. Note that the direction dependencies of the transmitted light intensities I1 and I2 shown in Fig. 12 are obtained by the side-view scanning carried out by using the camera as the light detector 12.

A direction in which a peak appears in each of the direction dependencies of the transmitted light intensities I1 and I2 corresponds to, of a direction in which the light source 11, the core ai, and the light detector 12 are aligned, a direction in which the core ai is closer to the light source 11. Further, a direction in which a dip appears in each of the direction dependencies of the transmitted light intensities I1 and I2 corresponds to, of the direction in which the light source 11, the marker c, and the light detector 12 are aligned, a direction in which the marker c is closer to the light source 11. Thus, the control section of the fusion splicing device 1 can identify the core positions of the optical fibers OF1 and OF2 on the basis of the directions in which the peaks appear in the direction dependencies of the transmitted light intensities I1 and I2, and can identify the marker positions of the optical fibers OF1 and OF2 on the basis of the directions in which the dips exist in the direction dependencies of the transmitted light intensities I1 and I2.

The control section of the fusion splicing device 1 selects one relation from among the above-described relations 1 to 8. For example, the control section of the fusion splicing 1 selects, from among the above-described relations 1 to 8, a relation which is closest (most similar) to the relation between the marker positions of the optical fibers OF1 and OF2 having been identified in the pre-fusion-splicing measurement step S12. Note that the "relation which is closest to the relation between the marker positions of the optical fibers OF1 and OF2 having been identified in the pre-fusion-splicing measurement step S12" can be defined as follows, for example. That is, such a case is considered that rotational alignment of the optical fibers OF1 and OF2 is carried out such that the core position of the optical fiber OF1 and the core position of the optical fiber OF2 are aligned with a smallest amount of rotation possible. In this case, a condition that "(a) the core positions and the marker positions of the optical fibers OF1 and OF2 having been subjected to rotational alignment and (b) the core positions and the marker positions of the optical fibers OF1 and OF2 satisfying at least one of the relations 1 to 8 match each other" is satisfied. Alternatively, any one of the relations 1 to 8 satisfies a condition that "(a) the core positions and the marker positions of the optical fibers OF1 and OF2 having been subjected to rotational alignment and (b) the core positions and the marker positions of the optical fibers OF1 and OF2 satisfying this relation match each other". Among the relations 1 to 8, a relation satisfying this condition is expressed as "a relation which is closest to the relation between the marker positions of the optical fibers OF1 and OF2 having been identified in the pre-fusion-splicing measurement step S12". Then, in the alignment step S13, the control section of the fusion splicing device 1 carries out alignment of the optical fibers OF1 and OF2 such that the marker positions of the optical fibers OF1 and OF2 satisfy the selected relation. Further, in the determination step S17, the control section of the fusion splicing device 1 determines whether or not the marker positions of the optical fibers OF1 and OF2 satisfy the selected relation. Therefore, with the test method S10 in accordance with the present embodiment, it is possible to identify which of the relations 1 to 8 the connection mode of the optical fibers OF1 and OF2 satisfies and to fusion-splice the optical fibers OF1 and OF2 via the identified connection mode.

A range of directions for measuring the transmitted light intensities I1 and I2 in the post-fusion-splicing measurement step S16 may be limited in accordance with the selected relation. For example, in a case where the marker positions of the optical fibers OF1 and OF2 satisfy the relation 1 (Fig. 4), the relation 2 (Fig. 5), the relation 5 (Fig. 8), or the relation 8 (Fig. 11), directions in which the markers c of the optical fibers OF1 and OF2 exist are within a range of not more than 90° as viewed from the centers of the optical fibers OF1 and OF2. Therefore, in this case, a range of directions for measuring the transmitted light intensities I1 and I2 in the post-fusion-splicing measurement step S16 can be limited to a range of 90°, for example. With this, it is possible to shorten the time required to carry out the side-view scanning in the post-fusion-splicing measurement step S16. Further, in this case, for the purpose of further shortening the time required to carry out the side-view scanning in the post-fusion-splicing measurement step S16, alignment of the optical fibers OF1 and OF2 in the alignment step S13 is preferably carried out such that the markers c of the optical fibers OF1 and OF2 face the light source 11.

In a case where, the cores are arranged so as to have n-fold symmetry in a cross section of each of the optical fibers OF1 and OF2, a range of directions of the optical fibers OF1 and OF2 around the axes in measurement of the transmitted light intensities I1 and I2 in the post-fusion-splicing measurement step S16 can be limited to a range of not more than $k \times 360°/n$, where $k$ is any natural number of less than $n$. Alternatively, the range can be limited to a range of not more than $(3/2) \times k \times 360°/n$, where $k$ is any natural number of less than $(2/3) \times n$. In one example, the range for measuring the transmitted light intensities I1 and I2 in the post-fusion-splicing measurement step S16 can be limited to a range of not more than $360°/n$ or to a range of not more than $(3/2) \times 360°/n$ (where $k=1$). Alternatively, the range for measuring the transmitted light intensities I1 and I2 in the post-fusion-splicing measurement step S16 can be limited to a range of not more than $2 \times 360°/n$ or to a range of not more than $(3/2) \times 2 \times 360°/n$ (where $k=2$). Note that a lower limit value of the above range may be any value, and may be $(k-1) \times 360°/n+15°$, for example.

With this, it is possible to determine alignment of k (in a case where an upper limit value of the above range is $k \times 360°/n$) core(s) or k+1 (in a case where the upper limit value of the above range is $1.5 \times k \times 360°/n$) cores. Furthermore, it is possible to shorten the time required to carry out the side-view scanning in the post-fusion-splicing measurement step S16, in comparison to a configuration that carries out the side-view scanning in all directions while rotating the optical fibers OF1 and OF2 by 360°. As k becomes smaller, the time required to carry out the side-view scanning becomes shorter. The reason is that the above configuration reduces the range for carrying out the side-view scanning. Meanwhile, as k increases, the determination of the alignment of the cores achieves higher precision. The reason is that the above configuration increases the number of cores whose positions are to be measured.

In this case, the range of directions, around the axes of the optical fibers OF1 and OF2, for measuring the transmitted light intensities I1 and I2 in the post-fusion-splicing measurement step S16 is preferably a range which includes the markers c and which is not more than $k \times 360°/n$, where k is any natural number of less than n. Alternatively, the range is preferably a range which includes the markers c and which is not more than $(3/2) \times k \times 360°/n$, where k is any natural number of less than $(2/3) \times n$. With this, in the post-fusion-splicing measurement step S16, it is possible to determine not only alignment of the cores but also alignment of the markers c. Furthermore, it is possible to shorten the time required to carry out the side-view scanning in the post-fusion-splicing measurement step S16, in comparison to a configuration that carries out the side-view scanning in all directions while rotating the optical fibers OF1 and OF2 by 360°. Instead of setting the upper limit value of the above range at $(3/2) \times k \times 360°/n$, the upper limit value of the above range may be set at $k \times 360°/n+$ (a half-value width of a peak corresponding to the core in the graph indicative of the direction dependency of the transmitted light intensity I1, I2). Also in this case, it is possible to determine the alignment of k+1 cores. Further, it is also possible to shorten the time required to carry out the side-view scanning in the post-fusion-splicing measurement step S16, in comparison to a configuration that carries out the side-view scanning in all directions while rotating the optical fibers OF1 and OF2 by 360°.

The control section of the fusion splicing device 1 may be configured to select two or more relations from among the above-described relations 1 to 8 and to determine, in the determination step S17, whether or not the marker positions of the optical fibers OF1 and OF2 satisfy any one of the selected two or more relations. Of the relations 5 to 8, each of which corresponds to inverted connection, relations in which the markers of the optical fibers OF1 and OF2 are particularly close to each other are: the relation 5 in which the markers thereof are close to each other with the markers being sandwiched between two cores (Fig. 8); and the relation 8 in which the markers thereof are close to each other with the markers sandwiching one core therebetween (Fig. 11). It is the position of the marker c that determines which of these relations minimizes the range of the directions for measuring the transmitted light intensities I1 and I2 when it is satisfied. Therefore, in selecting one relation corresponding to the general connection and one relation corresponding to the inverted connection, it is preferable to select the relation 1 (Fig. 4) and the relation 5 (Fig. 8) or to select the relation 1 (Fig. 4) and the relation 8 (Fig. 11). With either of the selections, the markers are close to each other; therefore, the range of the directions for measuring the transmitted light intensities I1 and I2 can be made small enough. This makes it easier to measure the marker positions. In a case where the relation 5 is selected, the marker c of the optical fiber OF1 and the marker c of the optical fiber OF2 are close to each other with the markers c being sandwiched between two cores. Therefore, even when the range of the side-view scanning is limited to a range between these two cores, it is possible to measure the positions of both the markers c of the optical fibers OF1 and OF2. Meanwhile, in a case where the relation 8 is selected, the marker c of the optical fiber OF1 and the marker c of the optical fiber OF2 are close to each other with the markers c sandwiching one core therebetween. Therefore, when the range of the side view scanning is limited to a range between the one core and a core adjacent to the one core, it is possible to measure the position of only one of the markers c of the optical fibers OF1 and OF2. Thus, in a case where the latter is selected, it is necessary to increase the range of the side-view scanning in order to measure the positions of both the markers c of the optical fibers OF1 and OF2. As a result, the time required for the side-view scanning becomes longer, in comparison to a case where the former is selected. Therefore, selecting the relation 1 and the relation 5 is more preferable than selecting the relation 1 and the relation 8.

Estimation of Connection Loss

As discussed above, in the determination step S17, the degree of the coupling efficiency or the degree of the connection loss may be estimated on the basis of the core positions of the optical fibers OF1 and OF2. With reference to Fig. 13, the following will provide supplementary information about a method for estimating a coupling efficiency or a coupling efficiency which can be applied in this case. In Fig. 13, (a) is a side view of the optical fibers OF1 and OF2, (b) is a front view of the end surface σ2 of the optical fiber OF1 viewed in the direction of the sight line E2, and (c) is a front view of the end surface σ1 of the optical fiber OF2 viewed in the direction of the sight line E1.

First, in the transmitted light intensities I1 and I2 having been measured in the post-fusion-splicing measurement step S16, a difference $\Delta\theta i$ between directions of peaks corresponding to the cores ai is specified. As shown in Fig. 13, the difference $\Delta\theta i$ indicates a difference between (a) a direction in which the core ai of the optical fiber OF exists and (b) a direction in which the core ai of the optical fiber OF2 exists, as viewed from the centers of the optical fibers OF1 and OF2. Hereinafter, the difference $\Delta\theta i$ will be referred to as an amount of rotational deviation $\Delta\theta i$ between the cores ai.

Next, from the amount of rotational deviation $\Delta\theta i$ between the cores ai, an amount of positional deviation $\Delta di$ between the cores ai is calculated according to the formula (1) below. Here, r denotes a predetermined constant indicative of a distance from the center of the optical fiber OF1, OF2 to each of the cores a1 to an.

$$\Delta di = r \cdot \Delta \theta i \quad \cdots \text{(1)}$$

Next, from the amount of positional deviation $\Delta di$ between the cores ai, a coupling efficiency $\eta i$ of the cores ai is calculated according to the formula (2) below. Here, w1 denotes a predetermined constant indicative of a mode field radius of the core ai of the optical fiber OF1. Meanwhile, w2 denotes a predetermined constant indicative of a mode field radius of the core ai of the optical fiber OF2.

$$\eta i = \frac{4w_1^2 w_2^2}{(w_1^2 + w_2^2)^2} \exp\left(-\frac{2\Delta di^2}{w_1^2 + w_2^2}\right) \quad \cdots \text{(2)}$$

Lastly, the coupling efficiencies $\eta i$ of the cores ai are averaged to yield an average coupling efficiency $\eta$. Note that the following operation may be employed: (1) the amounts of rotational deviation $\Delta\theta i$ of the cores ai is averaged to yield an average amount of rotational deviation $\Delta\theta$; (2) an average amount of positional deviation $\Delta d$ is calculated from the average amount of rotational deviation $\Delta\theta$; and (3) an average coupling efficiency $\eta$ is calculated from the average amount of positional deviation $\Delta d$. Alternatively, the following operation may be employed: (1) an amount of shifting, in a direction of a rotation angle, of one of two graphs (see Fig. 12) indicative of the direction dependencies of the transmitted light intensities I1 and I2 of the optical fibers OF1 and OF2 obtained in the post-fusion-splicing measurement step S16 which amount of shifting gives a maximum correlation coefficient between the two graphs may be obtained as an average amount of positional deviation $\Delta\theta$; (2) an average amount of positional deviation $\Delta d$ is calculated from the average amount of rotational deviation $\Delta\theta$; and (3) an average coupling efficiency $\eta$ is calculated from the average amount of positional deviation $\Delta d$.

Note that the connection loss may be estimated by carrying out calculation based on the average coupling efficiency $\eta$ according to a known method.

Fusion Splicing System and Test System

The fusion splicing system is a system constituted by a single device or a plurality of devices for carrying out the steps (except for a step carried out by the worker) constituting the fusion splicing method S1. Each device may be configured to carry out a single step or may be configured to carry out a plurality of steps. In a case where the fusion splicing system is constituted by a single device, the fusion splicing system is configured in a similar manner to that of the above-described fusion splicing device 1. In a case where the fusion splicing system is constituted by a plurality of devices, the fusion splicing system is configured as below, for example.

For example, the fusion splicing system can be a system including: a first device which carries out the pre-fusion-splicing measurement step S12, the alignment step S13, the abutting step S14, and the fusion splicing step S15; and a second device which carries out the post-fusion-splicing measurement step S16, the determination step S17, and the estimation step S18. In this case, the first device can be constituted by, for example, a light source, a light detector, an alignment mechanism (e.g., a rotating mechanism and a translating mechanism), a heating section, and a control section, which are identical to those described above. In this case, the control section of the first device can execute the pre-fusion-splicing measurement step S12, the alignment step S13, the abutting step S14, and the fusion splicing step S15 by using the light source, the light detector, the alignment mechanism (e.g., the rotating mechanism and the translating mechanism), and the heating section described above. The second device can be constituted by a light source, a light detector, an alignment mechanism (e.g., a rotating mechanism), and a control section, which are identical to those described above. In this case, the control section of the second device can execute the post-fusion-splicing measurement step S16, the determination step S17, and the estimation step S18 by using the light source, the light detector, and the alignment mechanism (e.g., the rotating mechanism) described above.

In this case, the optical fibers OF1 and OF2 having been fusion-spliced to each other are transferred from the first device to the second device with the optical fibers OF1 and OF2 being fixed to holding members (e.g., fiber holders which are attachable to and detachable from the first device and the second device). The holding members may be left in the first device, and only the optical fibers OF1 and OF2 having been fusion-spliced to each other may be transferred from the first device to the second device. The measurement result obtained in the pre-fusion-splicing measurement step S12 may be transmitted from the first device to the control section of the second device via communication. In a case where the preparation step S11 is carried out by a device such as a robot, the device that carries out the preparation step S11 can also be included in the fusion splicing system. A mechanism that carries out the preparation step S11 (e.g., the above-described alignment mechanism) may be integrated in the first device. The transfer of the optical fibers OF1 and OF2 from the first device to the second device may be carried out by a worker or a device such as a robot. In a case where the transfer is carried out by the device, the device may be included in the fusion splicing system as an additional constituent element.

Alternatively, the fusion splicing system can be a system including: a first device which carries out the pre-fusion-splicing measurement step S12; and a second device which carries out the alignment step S13, the abutting step S14, the fusion splicing step S15, the post-fusion-splicing measurement step S16, the determination step S17, and the estimation step S18. In this case, the first device can be constituted by, for example, a light source, a light detector, an alignment mechanism (e.g., a rotating mechanism and a translating mechanism), and a control section, which are identical to those described above. In this case, the control section of the first device can execute the pre-fusion-splicing measurement step S12 by using the light source, the light detector, and the alignment mechanism (e.g., the rotating mechanism and the translating mechanism) described above. The second device can be constituted by, for example, a light source, a light detector, an alignment mechanism (e.g., a rotating mechanism and a translating mechanism), a heating section, and a control section, which are identical to those described above. In this case, the control section of the second device executes the alignment step S13, the abutting step S14, the fusion splicing step S15, the post-fusion-splicing measurement step S16, the determination step S17, and the estimation step S18 by using the light source, the light detector, the alignment mechanism (e.g., the rotating mechanism and the translating mechanism), and the heating section described above.

In this case, the optical fibers OF1 and OF2 are transferred from the first device to the second device with the optical fibers OF1 and OF2 being fixed to respective holding members (e.g., fiber holders which are attachable to and detachable from the first device and the second device). The measurement result obtained in the pre-fusion-splicing measurement step S12 is transmitted from the first device to the second device via communication. The transfer of the optical fibers OF1 and OF2 from the first device to the second device may be carried out by a worker or a device such as a robot. In a case where the transfer is carried out by the device, the device may be included in the fusion splicing system as an additional constituent element.

Alternatively, the fusion splicing system can be a system including: a first device which carries out the pre-fusion-splicing measurement step S12 and the alignment step S13; and a second device which carries out the abutting step S14, the fusion splicing step S15, the post-fusion-splicing measurement step S16, the determination step S17, and the estimation step S18. In this case, the first device can be constituted by, for example, a light source, a light detector, an alignment mechanism (e.g., a rotating mechanism and a translating mechanism), and a control section, which are identical to those described above. In this case, the control section of the first device can execute the pre-fusion-splicing measurement step S12 and the alignment step S13 by using the light source, the light detector, and the alignment mechanism (e.g., the rotating mechanism and the translating mechanism) described above. The second device can be constituted by, for example, a light source, a light detector, an alignment mechanism (e.g., a rotating mechanism and a translating mechanism), a heating section, and a control section, which are identical to those described above. In this case, the control section of the second device executes the abutting step S14, the fusion splicing step S15, the post-fusion-splicing measurement step S16, the determination step S17, and the estimation step S18 by using the light source, the light detector, the alignment mechanism (e.g., the rotating mechanism and the translating mechanism), and the heating section described above.

In this case, the optical fibers OF1 and OF2 are transferred from the first device to the second device with the optical fibers OF1 and OF2 being fixed to respective holding members (e.g., fiber holders which are attachable to and detachable from the first device and the second device). Further, the measurement result obtained in the pre-fusion-splicing measurement step S12 may be transmitted from the first device to the second device via communication. The transfer of the optical fibers OF1 and OF2 from the first device to the second device may be carried out by a worker or a device such as a robot. In a case where the transfer is carried out by the device, the device may be included in the fusion splicing system as an additional constituent element.

Alternatively, the fusion splicing system can be a system including: a first device which carries out the pre-fusion-splicing measurement step S12 and the alignment step S13; a second device which carries out the abutting step S14 and the fusion splicing step S15; and a third device which carries out the post-fusion-splicing measurement step S16, the determination step S17, and the estimation step S18. In this case, the first device can be constituted by, for example, a light source, a light detector, an alignment mechanism (e.g., a rotating mechanism and a translating mechanism), and a control section, which are identical to those described above. In this case, the control section of the first device can execute the pre-fusion-splicing measurement step S12 and the alignment step S13 by using the light source, the light detector, and the alignment mechanism (e.g., the rotating mechanism and the translating mechanism) described above. The second device can be constituted by, for example, an alignment mechanism (e.g., a translating mechanism), a heating section, and a control section, which are identical to those described above. In this case, the control section of the second device can execute the abutting step S14 and the fusion splicing step S15 by using the alignment mechanism (e.g., the translating mechanism) and the heating section described above. Meanwhile, the third device can be constituted by a light source, a light detector, an alignment mechanism (e.g., a rotating mechanism), and a control section, which are identical to those described above. In this case, the control section of the third device can execute the post-fusion-splicing measurement step S16, the determination step S17, and the estimation step S18 by using the light source, the light detector, and the alignment mechanism (e.g., the rotating mechanism) described above.

In this case, the optical fibers OF1 and OF2 having been aligned are transferred from the first device to the second device with the optical fibers OF1 and OF2 being fixed to respective holding members (e.g., fiber holders which are attachable to and detachable from the first device, the second device, and the third device). By setting the holding members to the second device in the same manner as setting of the holding members to the first device, the positional relation between the optical fibers OF1 and OF2 is maintained. Then, the optical fibers OF1 and OF2 having been fusion-spliced to each other are transferred from the second device to the third device with the optical fibers OF1 and OF2 being fixed to the above-described holding members. The holding members may be left in the second device, and only the optical fibers OF1 and OF2 having been fusion-spliced to each other may be transferred from the second device to the third device. The measurement result obtained in the pre-fusion-splicing measurement step S12 is transmitted at least from the first device to the second device via communication. If necessary, the measurement result is transmitted from the first device or the second device to the third device via communication. In a case where the preparation step S11 is carried out by a device such as a robot, the device that carries out the preparation step S11 can also be included in the fusion splicing system. A mechanism that carries out the preparation step S11 (e.g., the above-described alignment mechanism) may be integrated in the first device. The transfer of the optical fibers OF1 and OF2 from the first device to the second device may be carried out by a worker or a device such as a robot. In a case where the transfer is carried out by the device, the device may be included in the fusion splicing system as an additional constituent element. Similarly, the transfer of the optical fibers OF1 and OF2 from the second device to the third device may be carried out by a worker or a device such as a robot. In a case where the transfer is carried out by the device, the device may be included in the fusion splicing system as an additional constituent element.

The test system is a system including a single device or a plurality of devices for carrying out the steps (except for a step carried out by the worker) constituting the test method S10. Each device may be configured to carry out a single step or may be configured to carry out a plurality of steps. In a case where the test system is constituted by a single device, the test system is configured similarly to the above-described test system 10 (a configuration obtained by eliminating the heating section 13 from the above-described fusion splicing device 1). In a case where the test system is constituted by a plurality of devices, the test system is configured as below, for example.

For example, the test system can be a system including: a first device which carries out the pre-fusion-splicing measurement step S12 and the alignment step S13; and a second device which carries out the post-fusion-splicing measurement step S16, the determination step S17, and the estimation step S18. In this case, the first device can be constituted by, for example, a light source, a light detector, an alignment mechanism (e.g., a rotating mechanism and a translating mechanism), and a control section, which are identical to those described above. In this case, the control section of the first device can execute the pre-fusion-splicing measurement step S12 and the alignment step S13 by using the light source, the light detector, and the alignment mechanism (e.g., the rotating mechanism and the translating mechanism) described above. The second device can be constituted by a light source, a light detector, an alignment mechanism (e.g., a rotating mechanism), and a control section, which are identical to those described above. In this case, the control section of the second device can execute the post-fusion-splicing measurement step S16, the determination step S17, and the estimation step S18 by using the light detector, the light detector, and the alignment mechanism (e.g., the rotating mechanism) described above.

In this case, the optical fibers OF1 and OF2 having been aligned are transferred from the first device to the fusion splicing device (a device which is separated from the first device and the second device and which carries out the abutting step S14 and the fusion splicing step S15) with the optical fibers OF1 and OF2 being fixed to respective holding members (e.g., fiber holders which are attachable to and detachable from the first device, the fusion splicing device, and the second device). By setting the holding members to the fusion splicing device in the same manner as setting of the holding members to the first device, the positional relation between the optical fibers OF1 and OF2 is maintained. Further, the optical fibers OF1 and OF2 having been fusion-spliced to each other are transferred from the fusion splicing device to the second device with the optical fibers OF1 and OF2 being fixed to the above-described holding members. The holding members may be left in the fusion splicing device, and only the optical fibers OF1 and OF2 having been fusion-spliced to each other may be transferred from the fusion splicing device to the second device. The measurement result obtained in the pre-fusion-splicing measurement step S12 is transmitted at least from the first device to the fusion splicing device via communication. If necessary, the measurement result is transmitted from the first device or the fusion splicing device to the second device via communication. In a case where the preparation step S11 is carried out by a device such as a robot, the device that carries out the preparation step S11 can also be included in the test system. A mechanism that carries out the preparation step S11 (e.g., the above-described alignment mechanism) may be integrated in the first device. The transfer of the optical fibers OF1 and OF2 from the first device to the fusion splicing device may be carried out by a worker or a device such as a robot. In a case where the transfer is carried out by the device, the device may be included in the test system as an additional constituent element. Similarly, the transfer of the optical fibers OF1 and OF2 from the fusion splicing device to the second device may be carried out by a worker or a device such as a robot. In a case where the transfer is carried out by the device, the device may be included in the test system as an additional constituent element.

Alternatively, the test system can be a system including: a first device which carries out the pre-fusion-splicing measurement step S12; a second device which carries out the alignment step S13; and a third device which carries out the post-fusion-splicing measurement step S16, the determination step S17, and the estimation step S18. In this case, the first device can be constituted by, for example, a light source, a light detector, an alignment mechanism (e.g., a rotating mechanism and a translating mechanism), and a control section, which are identical to those described above. In this case, the control section of the first device can execute the pre-fusion-splicing measurement step S12 by using the light source, the light detector, and the alignment mechanism (e.g., the rotating mechanism and the translating mechanism) described above. The second device can be constituted by, for example, an alignment mechanism (e.g., a translating mechanism) and a control section, which are identical to those described above. In this case, the control section of the second device can execute the alignment step S13 by using the alignment mechanism (e.g., the translating mechanism) described above. Meanwhile, the third device can be constituted by a light source, a light detector, an alignment mechanism (e.g., a rotating mechanism), and a control section, which are identical to those described above. In this case, the control section of the third device can execute the post-fusion-splicing measurement step S16, the determination step S17, and the estimation step S18 by using the light detector, the light detector, and the alignment mechanism (e.g., the rotating mechanism) described above.

In this case, the optical fibers OF1 and OF2 having been aligned are transferred from the first device to the second device with the optical fibers OF1 and OF2 being fixed to respective holding members (e.g., fiber holders which are attachable to and detachable from the first device, the later-described fusion splicing device, the second device, and the third device). By setting the holding members to the second device in the same manner as setting of the holding members to the first device, the positional relation between the optical fibers OF1 and OF2 is maintained. Further, the optical fibers OF1 and OF2 having been aligned are transferred from the second device to the fusion splicing device (a device which is separated from the first device, the second device, and the third device and which carries out the abutting step S14 and the fusion splicing step S15) with the optical fibers OF1 and OF2 being fixed to the respective holding members. By setting the holding members to the fusion splicing device in the same manner as setting of the holding members to the second device, the positional relation between the optical fibers OF1 and OF2 is maintained. Then, the optical fibers OF1 and OF2 having been fusion-spliced to each other are transferred from the fusion splicing device to the third device with the optical fibers OF1 and OF2 being fixed to the above-described holding members. The holding members may be left in the fusion splicing device, and only the optical fibers OF1 and OF2 having been fusion-spliced to each other may be transferred from the fusion splicing device to the third device. The measurement result obtained in the pre-fusion-splicing measurement step S12 is transmitted at least from the first device to the second device via communication, and is transmitted from the second device to the fusion splicing device via communication. If necessary, the measurement result is transmitted from the first device, the second device, or the fusion splicing device to the third device via communication. In a case where the preparation step S11 is carried out by a device such as a robot, the device that carries out the preparation step S11 can also be included in the fusion splicing system. A mechanism that carries out the preparation step S11 (e.g., the above-described alignment mechanism) may be integrated in the first device. The transfer of the optical fibers OF1 and OF2 from the first device to the second device may be carried out by a worker or a device such as a robot. In a case where the transfer is carried out by the device, the device may be included in the fusion splicing system as an additional constituent element. Similarly, the transfer of the optical fibers OF1 and OF2 from the second device to the fusion splicing device may be carried out by a worker or a device such as a robot. In a case where the transfer is carried out by the device, the device may be included in the fusion splicing system as an additional constituent element. Similarly, the transfer of the optical fibers OF1 and OF2 from the fusion splicing device to the third device may be carried out by a worker or a device such as a robot. In a case where the transfer is carried out by the device, the device may be included in the fusion splicing system as an additional constituent element.

Variations

In a case where each of the markers of the optical fibers OF1 and OF2 is a low refractive index marker (a marker having a lower refractive index than that of a cladding), a dip shape appears in a direction corresponding to a marker position in a graph indicative of a direction dependency of transmitted light intensity of each of the optical fibers OF1 and OF2, as shown in Fig. 12. The "dip shape" herein refers to a shape of a graph indicative of a transmitted light intensity which turns from decreasing to increasing as the direction changes. Thus, the present embodiment employs such a configuration that the marker positions of the optical fibers OF1 and OF2 are identified on the basis of the directions in which the dip shapes appear in the graphs indicative of the direction dependencies of the transmitted light intensities of the optical fibers OF1 and OF2.

However, the present invention is not limited to this. That is, it is possible to employ such a configuration that, in a case where a predetermined specific shape (first shape) appears in a direction corresponding to the marker position in the graph indicating the direction dependency of the transmitted light intensity of the optical fiber OF1, the marker position of the optical fiber OF1 is identified on the basis of the direction in which the shape (first shape) appears in the graph. Similarly, it is possible to employ such a configuration that, in a case where a predetermined specific shape (second shape) appears in a direction corresponding to the marker position in the graph indicating the direction dependency of the transmitted light intensity of the optical fiber OF2, the marker position of the optical fiber OF2 is identified on the basis of the direction in which the shape (second shape) appears in the graph. Note here that the specific shape (first shape) appearing in the direction corresponding to the marker position in the graph indicating the direction dependency of the transmitted light intensity of the optical fiber OF1 and the specific shape (second shape) appearing in the direction corresponding to the marker position in the graph indicating the direction dependency of the transmitted light intensity of the optical fiber OF2 may be identical in shape or may be different in shape.

For example, in a case where each of the markers of the optical fibers OF1 and OF2 is a high refractive index marker (a marker having a higher refractive index than that of a cladding), a peak shape appears in a direction corresponding to the marker position in a graph indicative of a direction dependency of a transmitted light intensity of each of the optical fibers OF1 and OF2, as shown in Fig. 14. The "peak shape" herein refers to a shape of a graph indicative of a transmitted light intensity which turns from increasing to decreasing as the direction changes. In this case, such a configuration may be employed that the marker positions of the optical fibers OF1 and OF2 are identified on the basis of the directions in which the peak shapes appear in the graphs indicative of the direction dependencies of the transmitted light intensities of the optical fibers OF1 and OF2. As can be seen from Fig. 14, peak shapes corresponding to core positions periodically appear in the graphs indicative of the direction dependencies of the transmitted light intensities of the optical fibers OF1 and OF2. Therefore, in the graphs indicative of the direction dependencies of the transmitted light intensities of the optical fibers OF1 and OF2, the core positions are identified on the basis of the directions in which the peak shapes periodically appear, and the marker positions are identified on the basis of the directions in which peak shapes other than those appear.

(a) of Fig. 14 is a graph indicative of the direction dependencies of the transmitted light intensities I1 and I2 of the optical fibers OF1 and OF2 obtained in the post-fusion-splicing measurement step S16 in a case where the optical fibers OF1 and OF2 are fusion-spliced to each other via general connection (relation 1). Further, (b) of Fig. 14 is a graph indicative of the direction dependencies of the transmitted light intensities I1 and I2 of the optical fibers OF1 and OF2 obtained in the post-fusion-splicing measurement step S16 in a case where the optical fibers OF1 and OF2 are fusion-spliced to each other via inverted connection with respect to the axis L1 (relation 5).

Meanwhile, in a case where each of the markers of the optical fibers OF1 and OF2 is a low refractive index marker (a marker having a lower refractive index than that of a cladding) surrounded by a high refractive index area (an area having a higher refractive index than that of the cladding), a saw shape appears in a direction corresponding to the marker position in a graph indicative of a direction dependency of a transmitted light intensity of each of the optical fibers OF1 and OF2, as shown in Fig. 15. The "saw shape" herein refers to a shape of a graph indicative of a transmitted light intensity which (1) turns from increasing to decreasing, (2) turns from decreasing to increasing, (3) turns from increasing to decreasing, and (4) turns from decreasing to increasing as the direction changes. In this case, such a configuration may be employed that the marker positions of the optical fibers OF1 and OF2 are identified on the basis of the directions in which the saw shapes appear in the graphs indicative of the transmitted light intensities of the optical fibers OF1 and OF2.

(a) of Fig. 15 is a graph indicative of the direction dependencies of the transmitted light intensities I1 and I2 of the optical fibers OF1 and OF2 obtained in the post-fusion-splicing measurement step S16 in a case where the optical fibers OF1 and OF2 are fusion-spliced to each other via general connection (relation 1). Further, (b) of Fig. 15 is a graph indicative of the direction dependencies of the transmitted light intensities I1 and I2 of the optical fibers OF1 and OF2 obtained in the post-fusion-splicing measurement step S16 in a case where the optical fibers OF1 and OF2 are fusion-spliced to each other via inverted connection with respect to the axis L1 (relation 5).

Depending on the refractive index distributions in the markers of the optical fibers OF1 and OF2, top-hat shapes appear in directions corresponding to the marker positions in the graph indicative of the direction dependencies of the transmitted light intensities of the optical fibers OF1 and OF2, as shown in Fig. 16. The "top-hat shape" herein refers to a shape of a graph indicative of a transmitted light intensity which (1) turns from increasing to constant and (2) turns from constant to decreasing as the direction changes. In this case, such a configuration may be employed that the marker positions of the optical fibers OF1 and OF2 are identified on the basis of the directions in which the top-hats appear in the graph indicative of the direction dependencies of the transmitted light intensities of the optical fibers OF1 and OF2.

(a) of Fig. 16 is a graph indicative of the direction dependencies of the transmitted light intensities I1 and I2 of the optical fibers OF1 and OF2 obtained in the post-fusion-splicing measurement step S16, in a case where the optical fibers OF1 and OF2 are fusion-spliced to each other via general connection (relation 1). Further, (b) of Fig. 16 is a graph indicative of the direction dependencies of the transmitted light intensities I1 and I2 of the optical fibers OF1 and OF2 obtained in the post-fusion-splicing measurement step S16, in a case where the optical fibers OF1 and OF2 are fusion-spliced to each other via inverted connection with respect to the axis L1 (relation 5).

In the graphs indicative of the direction dependencies of the transmitted light intensities of the two optical fibers, shapes corresponding to the marker positions may be different from each other. For example, in a case where one of the optical fibers OF1 and OF2 has a low refractive index marker and the other of the optical fibers OF1 and OF2 has a high refractive index marker, a dip shape and a peak shape appear.

Supplementary Remark

The present invention is not limited to the embodiments, but can be altered by a skilled person in the art within the scope of the claims. The present invention also encompasses, in its technical scope, any embodiment derived by combining technical means disclosed in differing embodiments described above.

For example, the test method in accordance with the present invention only needs to include at least the above-described post-fusion-splicing measurement step. The alignment method in accordance with the present invention may or may not include other step(s). The test system in accordance with the present invention only needs to include a configuration(s) necessary to carry out at least the above-described post-fusion-splicing measurement step. The test system in accordance with the present invention may or may not include a configuration(s) necessary to carry out other step(s). Further, the fusion splicing method in accordance with the present invention only needs to include at least the above-described post-fusion-splicing measurement step and fusion splicing step. The fusion splicing method in accordance with the present invention may or may not include other step(s). The fusion splicing system in accordance with the present invention only needs to include a configuration(s) necessary to carry out at least the above-described post-fusion-splicing measurement step and fusion splicing step. The fusion splicing system in accordance with the present invention may or may not include a configuration(s) necessary to carry out other step(s). Furthermore, the method, in accordance with the present invention, for manufacturing a fiber connection body only needs to include at least the above-described post-fusion-splicing measurement step and fusion splicing step, similarly to the fusion splicing method in accordance with the present invention. The method, in accordance with the present invention, for manufacturing the fiber connection body may or may not include other step(s).

Aspects of the present invention can also be expressed as follows:

A test method in accordance with a first aspect includes: a post-fusion-splicing measurement step of identifying a position of a marker of one multi-core fiber of two multi-core fibers on a basis of a direction in which a predetermined first shape appears in a graph indicative of a direction dependency of a transmitted light intensity of the one multi-core fiber and identifying a position of a marker of the other multi-core fiber of the two multi-core fibers on a basis of a direction in which a predetermined second shape appears in a graph indicative of a direction dependency of a transmitted light intensity of the other multi-core fiber, each of the two multi-core fibers including a cladding and the marker formed inside the cladding, and the two multi-core fibers being fusion-spliced to each other via respective end surfaces of the two multi-core fibers.

A test method in accordance with a second aspect is configured such that, in the test method in accordance with the first aspect, the test method further includes: a determination step of determining, on a basis of positions of cores or the positions of the markers of the two multi-core fibers having been identified in the post-fusion-splicing measurement step, whether or not the fusion-splicing has been successfully carried out.

A test method in accordance with a third aspect is configured such that, in the determination step, (a) in a case where a positional relation between the markers of the two multi-core fibers having been identified in the post-fusion-splicing measurement step is a predetermined positional relation, it is determined that the fusion-splicing has been successfully carried out or (b) in a case where a positional relation between the markers of the two multi-core fibers having been identified in the post-fusion-splicing measurement step is not the predetermined positional relation, it is determined that the fusion-splicing has been failed.

A test method in accordance with a fourth aspect is configured such that, in the test method in accordance with the third aspect, the test method further includes: a pre-fusion-splicing measurement step of identifying the positional relation between the markers of the two multi-core fibers, the pre-fusion-splicing measurement step being carried out before a step of fusion-splicing the two multi-core fibers, the predetermined positional relation being, among positional relations between the markers of the two multi-core fibers which positional relations have a potential to arise in a case where each of cores of the one multi-core fiber is optically connected to any one of cores of the other multi-core fiber, a positional relation which is closest to the positional relation between the markers of the two multi-core fibers having been identified in the pre-fusion-splicing measurement step.

A test method in accordance with a fifth aspect is configured such that, in the test method in accordance with the fourth aspect, in a cross section of each of the two multi-core fibers, the cores are arranged so as to have n-fold symmetry; and a range of directions for measuring the transmitted light intensities in the post-fusion-splicing measurement step is limited to (a) any range of not more than $k \times 360°/n$, where k is any natural number of less than n, or to (b) any range of not more than $(3/2) \times k \times 360°/n$, where k is any natural number of not less than 1 and less than $(2/3) \times n$.

A test method in accordance with a sixth aspect is configured such that, in the test method in accordance with any one of the first to fifth aspects, in a cross section of each of the two multi-core fibers, the cores are arranged so as to have n-fold symmetry; and a range of directions for measuring the transmitted light intensities in the post-fusion-splicing measurement step is limited to (a) any range of not more than $k \times 360°/n$, where k is any natural number of less than n, or to (b) any range of not more than $(3/2) \times k \times 360°/n$, where k is any natural number of not less than 1 and less than $(2/3) \times n$.

A test method in accordance with a seventh aspect is configured such that, in the test method in accordance with the sixth aspect, the range of the directions for measuring the transmitted light intensities in the post-fusion-splicing measurement step is limited to (a) any range which includes the markers and which is not more than $k \times 360°/n$, where k is any natural number of less than n, or to (b) any range which includes the markers and which is not more than $(3/2) \times k \times 360°/n$, where k is any natural number of not less than 1 and less than $(2/3) \times n$.

A test method in accordance with an eighth aspect is configured such that, in the test method in accordance with any one of the first to seventh aspects, the test method further includes: an estimation step of estimating, on a basis of either of or both of (a) the positions of the cores and (b) the positions of the markers of the two multi-core fibers having been identified in the post-fusion-splicing measurement step, at least one selected from the group consisting of (1) to (6): (1) a coupling efficiency or a connection loss of the two multi-core fibers; (2) a correspondence relation between core numbers of the cores of the one multi-core fiber and core numbers of the cores, which are optically coupled to the cores of the one multi-core fiber, of the other multi-core fiber; (3) which of a plurality of regions obtained by dividing the cladding of the one multi-core fiber includes the marker of the one multi-core fiber and which of a plurality of regions obtained by dividing the cladding of the other multi-core fiber includes the marker of the other multi-core fiber; (4) either of or both of (a) an amount of overlap between the marker of the one multi-core fiber and the marker of the other multi-core fiber and (b) an amount of deviation between the marker of the one multi-core fiber and the marker of the other multi-core fiber; (5) either of or both of (a) an amount of overlap between the cores of the one multi-core fiber and the cores, which are optically coupled to the cores of the one multi-core fiber, of the other multi-core fiber and (b) an amount of deviation between the cores of the one multi-core fiber and the cores, which are optically coupled to the cores of the one multi-core fiber, of the other multi-core fiber; and (6) polarities of the two multi-core fibers.

A test method in accordance with a ninth aspect is configured such that, in the test method in accordance with any one of the first to eighth aspects, the test method further includes: an alignment step of carrying out rotational alignment of the two multi-core fibers such that the markers face a light source which is used in the post-fusion-splicing measurement step, the alignment step being carried out before a step of fusion-splicing the two multi-core fibers.

A test method in accordance with a tenth aspect is configured such that, in the test method in accordance with any one of the first to ninth aspects, each of the markers is a low refractive index marker which has a lower refractive index than that of the cladding; and each of the first shape and the second shape is a dip shape.

A test method in accordance with an eleventh aspect is configured such that, in the test method in accordance with any one of the first to ninth aspects, each of the markers is a high refractive index marker which has a higher refractive index than that of the cladding; and each of the first shape and the second shape is a peak shape.

A test method in accordance with a twelfth aspect is configured such that, in the test method in accordance with any one of the first to ninth aspects, each of the markers is a low refractive index marker which has a higher refractive index than that of the cladding and which is surrounded by a high refractive index area having a higher refractive index than that of the cladding; and each of the first shape and the second shape is a saw shape.

A test method in accordance with a thirteenth aspect is configured such that, in the test method in accordance with any one of the first to ninth aspects, the marker of the one multi-core fiber is a low refractive index marker which has a lower refractive index than that of the cladding, the marker of the other multi-core fiber is a high refractive index marker which has a higher refractive index than that of the cladding, the first shape is a dip shape, and the second shape is a peak shape.

A test method in accordance with a fourteenth aspect includes: a post-fusion-splicing measurement step of identifying a position of a core or a marker of one multi-core fiber of two multi-core fibers on a basis of a spatial distribution or a direction dependency of a transmitted light intensity of the one multi-core fiber and identifying a position of a core or a marker of the other multi-core fiber of the two multi-core fibers on a basis of a spatial distribution or a direction dependency of a transmitted light intensity of the other multi-core fiber, each of the two multi-core fibers including a cladding and the marker formed inside the cladding, and the two multi-core fibers being fusion-spliced to each other via respective end surfaces of the two multi-core fibers; and an estimation step of estimating, on a basis of either of or both of (a) the positions of the cores and (b) the positions of the markers of the two multi-core fibers having been identified in the post-fusion-splicing measurement step, at least one selected from the group consisting of (1) to (6): (1) a coupling efficiency or a connection loss of the two multi-core fibers; (2) a correspondence relation between core numbers of the cores of the one multi-core fiber and core numbers of the cores, which are optically coupled to the cores of the one multi-core fiber, of the other multi-core fiber; (3) which of a plurality of regions obtained by dividing the cladding of the one multi-core fiber includes the marker of the one multi-core fiber and which of a plurality of regions obtained by dividing the cladding of the other multi-core fiber includes the marker of the other multi-core fiber; (4) either of or both of (a) an amount of overlap between the marker of the one multi-core fiber and the marker of the other multi-core fiber and (b) an amount of deviation between the marker of the one multi-core fiber and the marker of the other multi-core fiber; (5) either of or both of (a) an amount of overlap between the cores of the one multi-core fiber and the cores, which are optically coupled to the cores of the one multi-core fiber, of the other multi-core fiber and (b) an amount of deviation between the cores of the one multi-core fiber and the cores, which are optically coupled to the cores of the one multi-core fiber, of the other multi-core fiber; and (6) polarities of the two multi-core fibers.

A test system in accordance with a fifteenth aspect includes: a single light source or a plurality of light sources; a single light detector or a plurality of light detectors; and a single control section or a plurality of control sections, the single control section or at least one of the plurality of control sections carrying out a post-fusion-splicing measurement step by using the single light source or at least one of the plurality of light sources and the single light detector or at least one of the plurality of light detectors, the post-fusion-splicing measurement step identifying a position of a marker of one multi-core fiber of two multi-core fibers on a basis of a direction in which a predetermined first shape appears in a graph indicative of a direction dependency of a transmitted light intensity of the one multi-core fiber and identifying a position of a marker of the other multi-core fiber of the two multi-core fibers on a basis of a direction in which a predetermined second shape appears in a graph indicative of a direction dependency of a transmitted light intensity of the other multi-core fiber, each of the two multi-core fibers including a cladding and the marker formed inside the cladding, and the two multi-core fibers being fusion-spliced to each other via respective end surfaces of the two multi-core fibers.

## Reference Signs List

S1: fusion splicing method
S10: test method
S11: preparation step
S12: pre-fusion-splicing measurement step
S13: alignment step
S14: abutting step
S15: fusion splicing step
S16: post-fusion-splicing measurement step
S17: determination step

## Claims

1. A test method comprising:
a post-fusion-splicing measurement step of identifying a position of a marker of one multi-core fiber of two multi-core fibers on a basis of a direction in which a predetermined first shape appears in a graph indicative of a direction dependency of a transmitted light intensity of the one multi-core fiber and identifying a position of a marker of the other multi-core fiber of the two multi-core fibers on a basis of a direction in which a predetermined second shape appears in a graph indicative of a direction dependency of a transmitted light intensity of the other multi-core fiber, each of the two multi-core fibers including a cladding and the marker formed inside the cladding, and the two multi-core fibers being fusion-spliced to each other via respective end surfaces of the two multi-core fibers.

2. The test method according to claim 1, further comprising:
a determination step of determining, on a basis of positions of cores or the positions of the markers of the two multi-core fibers having been identified in the post-fusion-splicing measurement step, whether or not the fusion-splicing has been successfully carried out.

3. The test method according to claim 2, wherein:
in the determination step, (a) in a case where a positional relation between the markers of the two multi-core fibers having been identified in the post-fusion-splicing measurement step is a predetermined positional relation, it is determined that the fusion-splicing has been successfully carried out or (b) in a case where a positional relation between the markers of the two multi-core fibers having been identified in the post-fusion-splicing measurement step is not the predetermined positional relation, it is determined that the fusion-splicing has been failed.

4. The test method according to claim 3, further comprising:

a pre-fusion-splicing measurement step of identifying the positional relation between the markers of the two multi-core fibers, the pre-fusion-splicing measurement step being carried out before a step of fusion-splicing the two multi-core fibers,
the predetermined positional relation being, among positional relations between the markers of the two multi-core fibers which positional relations have a potential to arise in a case where each of cores of the one multi-core fiber is optically connected to any one of cores of the other multi-core fiber, a positional relation which is closest to the positional relation between the markers of the two multi-core fibers having been identified in the pre-fusion-splicing measurement step.

5. The test method according to claim 4, wherein:
in the pre-fusion-splicing measurement step, the position of the marker of the one multi-core fiber is identified on a basis of a spatial distribution or a direction dependency of the transmitted light intensity of the one multi-core fiber and the position of the marker of the other multi-core fiber is identified on a basis of a spatial distribution or a direction dependency of the transmitted light intensity of the other multi-core fiber.

6. The test method according to any one of claims 1 to 5, wherein:

in a cross section of each of the two multi-core fibers, the cores are arranged so as to have n-fold symmetry; and
a range of directions for measuring the transmitted light intensities in the post-fusion-splicing measurement step is limited to (a) any range of not more than $k \times 360°/n$, where k is any natural number of less than n, or to (b) any range of not more than $(3/2) \times k \times 360°/n$, where k is any natural number of not less than 1 and less than $(2/3) \times n$.

7. The test method according to claim 6, wherein:
the range of the directions for measuring the transmitted light intensities in the post-fusion-splicing measurement step is limited to (a) any range which includes the markers and which is not more than $k \times 360°/n$, where k is any natural number of less than n, or to (b) any range which includes the markers and which is not more than $(3/2) \times k \times 360°/n$, where k is any natural number of not less than 1 and less than $(2/3) \times n$.

8. The test method according to any one of claims 1 to 7, further comprising:
an estimation step of estimating, on a basis of either of or both of (a) the positions of the cores and (b) the positions of the markers of the two multi-core fibers having been identified in the post-fusion-splicing measurement step, at least one selected from the group consisting of (1) to (6):

(1) a coupling efficiency or a connection loss of the two multi-core fibers;
(2) a correspondence relation between core numbers of the cores of the one multi-core fiber and core numbers of the cores, which are optically coupled to the cores of the one multi-core fiber, of the other multi-core fiber;
(3) which of a plurality of regions obtained by dividing the cladding of the one multi-core fiber includes the marker of the one multi-core fiber and which of a plurality of regions obtained by dividing the cladding of the other multi-core fiber includes the marker of the other multi-core fiber;
(4) either of or both of (a) an amount of overlap between the marker of the one multi-core fiber and the marker of the other multi-core fiber and (b) an amount of deviation between the marker of the one multi-core fiber and the marker of the other multi-core fiber;
(5) either of or both of (a) an amount of overlap between the cores of the one multi-core fiber and the cores, which are optically coupled to the cores of the one multi-core fiber, of the other multi-core fiber and (b) an amount of deviation between the cores of the one multi-core fiber and the cores, which are optically coupled to the cores of the one multi-core fiber, of the other multi-core fiber; and
(6) polarities of the two multi-core fibers.

9. The test method according to any one of claims 1 to 8, further comprising:
an alignment step of carrying out rotational alignment of the two multi-core fibers such that the markers face a light source which is used in the post-fusion-splicing measurement step, the alignment step being carried out before a step of fusion-splicing the two multi-core fibers.

10. The test method according to any one of claims 1 to 9, wherein:

each of the markers is a low refractive index marker which has a lower refractive index than that of the cladding; and
each of the first shape and the second shape is a dip shape.

11. The test method according to any one of claims 1 to 9, wherein:

    each of the markers is a high refractive index marker which has a higher refractive index than that of the cladding; and
    each of the first shape and the second shape is a peak shape.

12. The test method according to any one of claims 1 to 9, wherein:

    each of the markers is a low refractive index marker which has a higher refractive index than that of the cladding and which is surrounded by a high refractive index area having a higher refractive index than that of the cladding; and
    each of the first shape and the second shape is a saw shape.

13. The test method according to any one of claims 1 to 9, wherein:
    the marker of the one multi-core fiber is a low refractive index marker which has a lower refractive index than that of the cladding, the marker of the other multi-core fiber is a high refractive index marker which has a higher refractive index than that of the cladding, the first shape is a dip shape, and the second shape is a peak shape.

14. A test method comprising:

    a post-fusion-splicing measurement step of identifying a position of a core or a marker of one multi-core fiber of two multi-core fibers on a basis of a spatial distribution or a direction dependency of a transmitted light intensity of the one multi-core fiber and identifying a position of a core or a marker of the other multi-core fiber of the two multi-core fibers on a basis of a spatial distribution or a direction dependency of a transmitted light intensity of the other multi-core fiber, each of the two multi-core fibers including a cladding and the marker formed inside the cladding, and the two multi-core fibers being fusion-spliced to each other via respective end surfaces of the two multi-core fibers; and
    an estimation step of estimating, on a basis of either of or both of (a) the positions of the cores and (b) the positions of the markers of the two multi-core fibers having been identified in the post-fusion-splicing measurement step, at least one selected from the group consisting of (1) to (6):

        (1) a coupling efficiency or a connection loss of the two multi-core fibers;
        (2) a correspondence relation between core numbers of the cores of the one multi-core fiber and core numbers of the cores, which are optically coupled to the cores of the one multi-core fiber, of the other multi-core fiber;
(3) which of a plurality of regions obtained by dividing the cladding of the one multi-core fiber includes the marker of the one multi-core fiber and which of a plurality of regions obtained by dividing the cladding of the other multi-core fiber includes the marker of the other multi-core fiber;
(4) either of or both of (a) an amount of overlap between the marker of the one multi-core fiber and the marker of the other multi-core fiber and (b) an amount of deviation between the marker of the one multi-core fiber and the marker of the other multi-core fiber;
(5) either of or both of (a) an amount of overlap between the cores of the one multi-core fiber and the cores, which are optically coupled to the cores of the one multi-core fiber, of the other multi-core fiber and (b) an amount of deviation between the cores of the one multi-core fiber and the cores, which are optically coupled to the cores of the one multi-core fiber, of the other multi-core fiber; and
(6) polarities of the two multi-core fibers.

15. A test system comprising:

    a single light source or a plurality of light sources;
    a single light detector or a plurality of light detectors; and
    a single control section or a plurality of control sections,
    the single control section or at least one of the plurality of control sections carrying out a post-fusion-splicing measurement step by using the single light source or at least one of the plurality of light sources and the single light detector or at least one of the plurality of light detectors, the post-fusion-splicing measurement step identifying a position of a marker of one multi-core fiber of two multi-core fibers on a basis of a direction in which a predetermined first shape appears in a graph indicative of a direction dependency of a transmitted light intensity of the one multi-core fiber and identifying a position of a marker of the other multi-core fiber of the two multi-core fibers on a basis of a direction in which a predetermined second shape appears in a graph indicative of a direction dependency of a transmitted light intensity of the other multi-core fiber, each of the two multi-core fibers including a cladding and the marker formed inside the cladding, and the two multi-core fibers being fusion-spliced to each other via respective end surfaces of the two multi-core fibers.

# FIG. 1

S1

```
          ┌─────────────┐
          │    Start    │
          └─────────────┘
                 │
    ┌────────────────────────────┐
    │     Preparation step       │  ─ S11  ┐
    └────────────────────────────┘         │
                 │                          │
    ┌────────────────────────────┐         │
    │ Pre-fusion-splicing        │  ─ S12  │
    │ measurement step           │         ├─ S10
    └────────────────────────────┘         │
                 │                          │
    ┌────────────────────────────┐         │
    │     Alignment step         │  ─ S13  │
    └────────────────────────────┘         ┘
                 │
    ┌────────────────────────────┐
    │     Abutting step          │  ─ S14
    └────────────────────────────┘
                 │
    ┌────────────────────────────┐
    │   Fusion splicing step     │  ─ S15
    └────────────────────────────┘
                 │
    ┌────────────────────────────┐
    │ Post-fusion-splicing       │  ─ S16  ┐
    │ measurement step           │         │
    └────────────────────────────┘         │
                 │                          │
    ┌────────────────────────────┐         ├─ S10
    │   Determination step       │  ─ S17  │
    └────────────────────────────┘         │
                 │                          │
    ┌────────────────────────────┐         │
    │    Estimation step         │  ─ S18  │
    └────────────────────────────┘         ┘
                 │
          ┌─────────────┐
          │     End     │
          └─────────────┘
```

31

FIG. 2

## FIG. 3

## FIG. 4

## FIG. 5

(a)

(b) σ2 (OF1)

(c) σ1 (OF2)

## FIG. 6

(a)

(b) σ2 (OF1)

(c) σ1 (OF2)

FIG. 7

FIG. 8

## FIG. 9

(a)

(b)

σ2 (OF1)

(c)

σ2 (OF2)

## FIG. 10

(a)

(b)

σ2 (OF1)

(c)

σ2 (OF2)

## FIG. 11

(a)

(b)

(c)

## FIG. 12

(a)

(b)

## FIG. 13

FIG. 14

FIG. 15

## FIG. 16

(a)

(b)

## INTERNATIONAL SEARCH REPORT

| International application No. |
|---|
| **PCT/JP2024/015964** |

**A. CLASSIFICATION OF SUBJECT MATTER**

*G02B 6/255*(2006.01)i; *G01M 11/00*(2006.01)i; *G02B 6/02*(2006.01)i
FI:  G02B6/255; G02B6/02 461; G01M11/00 G

According to International Patent Classification (IPC) or to both national classification and IPC

**B. FIELDS SEARCHED**

Minimum documentation searched (classification system followed by classification symbols)

G02B6/255; G01M11/00; G02B6/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2013-50695 A (THE FURUKAWA ELECTRIC CO., LTD.) 14 March 2013 (2013-03-14) paragraphs [0038]-[0068], fig. 1-7 | 1-15 |
| Y | JP 2-287504 A (FUJIKURA ELECTRIC WIRE CORPORATION) 27 November 1990 (1990-11-27) p. 2, upper right column, line 3 to p. 3, upper left column, line 3, fig. 1a-3 | 1-15 |
| Y | JP 2014-106328 A (FUJITSU TELECOM NETWORKS LTD.) 09 June 2014 (2014-06-09) paragraphs [0017]-[0051], fig. 1-11 | 2-14 |
| A | JP 2022-44994 A (THE FURUKAWA ELECTRIC CO., LTD.) 18 March 2022 (2022-03-18) entire text, all drawings | 1-15 |
| A | JP 2020-20998 A (THE FURUKAWA ELECTRIC CO., LTD.) 06 February 2020 (2020-02-06) entire text, all drawings | 1-15 |

✓ Further documents are listed in the continuation of Box C.   ✓ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

# EP 4 703 779 A1

## INTERNATIONAL SEARCH REPORT

| International application No. |
|---|
| **PCT/JP2024/015964** |

### C. DOCUMENTS CONSIDERED TO BE RELEVANT

| Category* | Citation of document, with indication, where appropriate, of the relevant passages | Relevant to claim No. |
|---|---|---|
| A | JP 2004-341452 A (FUJIKURA LTD.) 02 December 2004 (2004-12-02)<br>entire text, all drawings | 1-15 |
| A | JP 8-506432 A (TELEFONAKTIEBOLAGET L M ERICSSON) 09 July 1996 (1996-07-09)<br>entire text, all drawings | 1-15 |
| A | EP 1508825 A1 (CCS TECHNOLOGY, INC.) 23 February 2005 (2005-02-23)<br>entire text, all drawings | 1-15 |

Form PCT/ISA/210 (second sheet) (July 2022)

43

## INTERNATIONAL SEARCH REPORT
### Information on patent family members

International application No.

**PCT/JP2024/015964**

| Patent document cited in search report | | | Publication date (day/month/year) | Patent family member(s) | | | Publication date (day/month/year) |
|---|---|---|---|---|---|---|---|
| JP | 2013-50695 | A | 14 March 2013 | US 2015/0055923 A1 paragraphs [0059]-[0089], fig. 1(a)-7(d) WO 2013/128730 A1 | | | |
| JP | 2-287504 | A | 27 November 1990 | (Family: none) | | | |
| JP | 2014-106328 | A | 09 June 2014 | (Family: none) | | | |
| JP | 2022-44994 | A | 18 March 2022 | (Family: none) | | | |
| JP | 2020-20998 | A | 06 February 2020 | US 2020/0064549 A1 entire text, all drawings | | | |
| JP | 2004-341452 | A | 02 December 2004 | (Family: none) | | | |
| JP | 8-506432 | A | 09 July 1996 | US 5572313 A entire text, all drawings WO 1995/014945 A1 EP 681707 A1 | | | |
| EP | 1508825 | A1 | 23 February 2005 | WO 2005/017585 A1 | | | |

Form PCT/ISA/210 (patent family annex) (July 2022)

44

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019163150 A